# EUROPÄISCHE PATENTSCHRIFT

(11) **EP 0 685 701 B1**
(45) Veröffentlichungstag und Bekanntmachung des Hinweises auf die Patenterteilung: **31.05.2000**
(21) Anmeldenummer: 95104843.8
(22) Anmeldetag: 31.03.1995
(51) Int. Cl.: F41J 5/02, G01S 17/06

(54) **Elektronische Zielscheibe und Verfahren zu dessen Auswertung**
Electronic target and method for its utilisation
Cible électronique et procédé pour sa mise en oeuvre

(30) Priorität: 05.05.1994 DE 4415944
(43) Veröffentlichungstag der Anmeldung: 06.12.1995
(73) Patentinhaber: Riener, Karl Stefan, 4563 Micheldorf (AT)
(72) Erfinder: Riener, Karl Stefan, A-4563 Micheldorf (AT); Dollansky, Erich, D-86438 Kissing (DE)
(74) Vertreter: Turi, Michael, Dipl.-Phys.

(56) Entgegenhaltungen:
- EP-A- 0 182 397
- EP-A- 0 354 284
- EP-A- 0 414 658
- EP-A- 0 525 733
- WO-A-87/05688
- DE-A- 3 815 373
- FR-A- 2 082 131
- US-A- 3 047 723
- US-A- 3 727 069
- US-A- 4 205 846

## Beschreibung

Die vorliegende Erfindung betrifft ein Verfahren und eine Vorrichtung zum Erfassen eines eine Zielscheibe durchfliegenden Projektils jeweils gemäß den Oberbegriffen der Ansprüche 1 und 6 sowie ein Verfahren und eine Vorrichtung zur anschließenden Auswertung der Trefferlage des Projektils in der Zielscheibe.

Nach dem Stand der Technik sind derartige elektronische Zielscheiben bereits bekannt. In der US 3,047,723 wird beispielseise eine photoelektrische Zielscheibe aus einer Anzahl Lichtschranken gebildet, deren Lichtstrahlen sich rechtwinklig schneiden. Die Trefferlage eines Projektils wird aus der Abschattung einzelner Lichtsensoren ermittelt. Der Nachteil dieses Systems liegt in dem nötigen aufwendigen optischen System, welches für jedes einzelne Lichtquellen/Lichtsensorenpaar benötigt wird.

Ebenso aufwendig ist die in der US 3,727,069 offenbarte Vorrichtung zur Bestimmung einer Projektiltrefferlage betriebt. Dabei wird die Zielscheibe ebenfalls aus einer Vielzahl von Lichtschranken gebildet, deren Lichtstrahlen sich rechtwinkelig schneiden. Die Trefferlage wird aus der Abschattung einzelner Lichtsensoren ermittelt.

Die EP 0 414 658 A2 zeigt auch eine Vorrichtung zur Trefferbild- bzw. Trefferlage-Anzeige. Das Geschoß wird mittels einer aufwendigen Optik und Restlichverstärker direkt auf einem Zeilensensor abgebildet. Die Aussteuerung des Zeilensensors erfolgt mittels Blendeneinstellung und Polarisationsfilter automatisch. Die Annäherung eines Geschosses muß eigens mittels eines Mikrophons erkannt werden.

Die gattungsgemäße EP-A-0 525 733 zeigt ein Verfahren und eine Vorrichtung zum Erfassen der Flugbahn eines Geschosses. Hierzu wird eine sich an einer Seite der Vorrichtung befindliche Lichtempfängerzeile mit Hilfe zweier punktförmiger Lichtquellen an der gegenüberliegenden Seite bestrahlt. Das Licht dieser beiden Lichtquellen fällt also unmittelbar auf die Lichtempfängerzeile und schattet beim Durchschuß eines Projektils ein oder mehrere Elemente der Lichtempfängerzeile ab. Aus den entsprechenden Signaländerungen der abgeschatteten Elemente werden die Koordinaten des Durchschußpunktes ermittelt.

Demgegenüber möchte die Erfindung eine einfache elektronische Zielscheibe mit geringem Aufwand für die Treffererfassung und Trefferauswertung schaffen, bei welcher für die Treffererfassung eine scharfe Abbildung des Durchschußpunktes gewährleistet ist.

Die Erfindung erreicht dieses Ziel durch die Gegenstände der Ansprüche 1, 6, 12 und 19.

Danach liefert die Erfindung ein Verfahren und eine Vorrichtung zur Erfassung bzw. Detektion eines eine Zielebene der elektronischen Zielscheibe durchfliegenden Projektils mittels wenigstens eines ortsauflösenden Lichtdetektors, wobei: durch wenigstens eine Lichtquelle wenigstens zwei Lichtfelder erzeugt werden, welche die Zielebene überstreichen und unter (einem) bestimmte(n) Winkel(n), insbesondere senkrecht, zueinander stehen; der jeweilige Schatten des die wenigstens zwei Lichtfelder durchdringenden Projektils auf wenigstens eine Mattscheibe abgebildet wird; das jweilige Bild der wenigstens einen Mattscheibe von dem wenigstens einen ortsauflösenden Lichtdetektor erfaßt wird.

Bevorzugt werden durch die wenigstens eine Lichtquelle wenigstens zwei Lichtfächer erzeugt und die jeweiligen Bilder der wenigstens einen Mattscheibe durch wenigstens einen - aus mehreren Sensorelementen bestehenden - Zeilensensor, insbesondere einen CCD-Sensor, erfaßt.

Bei einer bevorzugten Variante wird der Lichtfächer durch eine erste vor der wenigstens einen Lichtquelle angeordnete Blende mit schlitzförmiger Öffnung erzeugt und/oder das Licht des Lichtfächers anschlißend durch eine zweite vor der wenigstens einen Mattscheibe angeordneten Blende mit schlitzförmiger Öffnung geführt. Hierbei wird die Abbildung des Projektils verbessert. Ferner können dank der Blende(n) somit punktförmige Lichtquellen verwendet werden, welche auf einfachste Art Lichtfächer erzeugen.

Besonders bevorzugt wird das Licht der wenigstens einen Lichtquelle durch eine erste Optik gebündelt und/oder werden die jeweiligen Bilder der wenigstens einen Mattscheibe durch eine zweite Optik auf den wenigstens einen Lichtdetektor abgebildet. Hiermit ist das jeweilige Bild der wenigstens einen Mattscheibe unabhängig von der Dimension der Zielscheibe.

Weiterhin kann auch ein sogenannter "contact image sensor" verwendet werden, der als eine Baueinheit aufgebaut ist, welche aus einer Glasscheibe, einem Lichtwellenleiter und einem Lichtdetektor bzw. Sensor besteht. Dieser "contact image sensor" ersetzt damit die separate Mattscheibe, die zweite Optik und den Lichtdetektor. Hierbei ist der Lichtdetektor dieser Baueinheit so groß wie die zugehörige Glasscheibe, also ebensogroß wie die ersetzte Mattscheibe.

Besonders einfach wird die Lage des Projektils in der Zielebene aus der Lage seiner jeweiligen Schattenbilder auf dem wenigsten einen Lichtdetektor und der Lage der Lichtquellen zueinander, insbesondere über den Vierstreckenstrahlensatz, bestimmt.

Die erfindungsgemäße Zielscheibe sieht ferner ein Verfahren und eine Vorrichtung zur Auswertung eines - von der zuvor beschriebenen Vorrichtung zur Erfassung des Projektils - erzeugten Meßsignals vor, um die Trefferlage zu bestimmen. Dabei werden die Meßsignale bzw. Einzelmeßsignale einzelner Sensorelemente des Lichtdetektors während eines Meßzyklus über einen ersten Intergrator integriert und die so erhaltene Summensignale einzelner Sensorelemente mit Hilfe eines Addierers (oder eines zweiten Integrators) zu einem Gesamtwert addiert (oder integriert); der Gesamtwert wird in einem Komparator mit einem Referenzwert verglichen; und im Falle einer Abweichung vom Referenzwert wird/werden mit Hilfe einer Recheneinheit das/die, insbesondere vom Schatten des Projektils, abgedunkelte(n) Sensorelement(e) des Lichtdetektors bestimmt und daraus die Lage des Projektils in der Zielebene abgeleitet.

Bevorzugt ist der erste Integrator bereits im Lichtdetektor integriert bzw. enthalten.

Bevorzugt wird/werden dabei - im Falle einer Abweichung des Gesamtwertes vom Referenzwert - aus einem Vergleich der integrierten Summensignale des aktuellen Meßzyklus mit denen wenigstens eines vorhergehenden Meßzyklus das/die abgedunkelte(n) Sensorelement(e) und daraus die Lage des Schattens ermittelt.

Vorzugsweise werden die integrierten Summensignale und der Gesamtwert für eine vorgegebene Anzahl an Meßzyklen in einem dafür vorgesehenen Speicher abgelegt.

Bevorzugt wird der Referenzwert mit Hilfe der Recheneinheit als Mittelwert einer Anzahl abgespeicherter Gesamtwerte vorhergehender Meßzyklen ohne Abdunklung bestimmt.

Um den Einfluß von Schwingungen der Zielscheibe, insbesondere des Lichtdetektors, zu erfassen und bei der Trefferauswertung zu berücksichtigen, ist die Recheneinheit derart ausgelegt, daß ein Differenzbetrag zwischen einem integrierten Summensignal und einem zugeordneten Referenzsummensignal (eines internen Summensignals), die Summe über alle oder nahezu alle so erhaltenen Differenzbeträge über eines Meßzyklus gebildet wird, und durch Verändern der Zuordnung zwischen integriertem Summensignal und Referenzsummensignal die so erhaltene Summe an Differenzbeträgen minimiert wird, und aus der so erhaltenen Zuordnung die Lage des/der abgedunkelten Sensorelemente(s) korrigiert wird.

Vorzugsweise wird das Referenzsummensignal als Mittelwert einer Anzahl abgespeicherter Signalsummen vorhergehender Meßzyklen ohne Abdunklung bestimmt.

Besonders vorteilhaft wird die Beleuchtungsstärke der Lichtquelle über eine Detektorsteuereinheit derart eingestellt, daß das Sensorelement mit dem größten Meßsignal nahezu seinen maximal zulässigen Pegel erreicht.

Für eine besonders günstige Auswertung ist ein Analog-/Digitalwandler zur Umwandlung der empfangenen Meßsignale des Lichtdetektors vorgesehen.

Für eine komplette Auswertung ist eine zuvor beschriebene Auswertungsvorrichtung mit einer weiteren gleichartigen Auswertungsvorrichtung gekoppelt, derart, daß eine X/Y-Lage des Projektils in der Zielebene bestimmt werden kann.

Somit schafft die vorliegende Erfindung eine einfache und kostengünstge immaterielle elektronische Zielscheibe, die sich durch eine ebenso einfache wie exakte Auswertung der Trefferlage auszeichnet. An Stelle einer herkömmlichen Zielscheibe wird die Flugbahn des Projektils in der Zielebene optisch erfaßt, anschließend elektronisch ausgewertet und angezeigt. Beim Flug durch die Zielebene der elektronischen Zielscheibe wird das Projektil von zwei Seiten mittels punktförmiger Lichtquellen senkrecht zur Flugbahn beleuchtet. Der entstehende Schatten wird auf zwei Mattscheiben projeziert. Das Abbild der Mattscheiben wird jeweils mit Hilfe eines einfachen Objektives auf je einen Zeilensensor abgebildet. Der Zeilensensor wandelt die Lichtinformation in ein elektrisches Signal um. Aus diesem Signal wird die Information über die Fluglage des Projektils gewonnen. Durch den Einsatz zweier um 90° versetzter Zeilensensoren kann die genaue Fluglage im Raum beim Durchflug durch die Zielebene der Zielscheibe bestimmt werden. Eine elektronische Schaltung rechnet die Raumkoordinaten in die gewohnten Zielscheibenkoordinaten um und gibt die Trefferlage auf einem angeschlossenen Bildschirm aus.
Wird ein Körper in einer Ebene von zwei um 90° versetzter punktförmiger kontinuierlich emittierender Lichtquellen beleuchtet und die Lage der Schatten erfaßt, so kann seine Lage mit Hilfe bekannter mathematischer Methoden genau bestimmt werden.

Die vorliegenden Erfindung erfaßt bzw. detektiert das Abbild des entstehenden Schattens mittels elektronischer Bauelemente und die elektronische Auswertung der gewonnen Lageinformationen. Als Strahlung kann wahlweise sichtbares Licht aber auch unsichtbares Licht eingesetzt werden. Aufgrund der spektralen Empfindlichkeit der marktüblichen Zeilensensoren bietet sich auch die Infrarotstrahlung an.

Alternativ kann auch eine punktförmige Lichtquelle mit einem Parabolspiegel versehen werden und parallele Lichtstrahlen erzeugen. Bei der Umrechnung der ermittelten Koordinaten in absolute Koordinaten ist die andere Lichtquelle entsprechend zu berücksichtigen.

Für die Umwandlung von Lichtinformationen sind die og. Zeilensensoren allgemein bekannt. In einer Zeile sind eine bestimmte Anzahl lichtempfindlicher Sensoren gleichmäßig verteilt angeordnet. Jeder einzelne Sensor wandelt die auftreffende Lichtenergie in ein proportionales elektrisches Signal um. Dies bewirkt eine Integration der Beleuchtungsstärke innerhalb eines Abfragezyklusses des Sensors. Der Pegel des Ausgangssignales wird durch die richtige Wahl der Zeitdauer zwischen den einzelnen Abfragen der Integrationszeit der Sensorelemente des Lichtdetektors und der Beleuchtungsstärke eingestellt.

Wird eine Mattscheibe gleichmäßig von einer Lichtquelle beleuchtet und auf einem Zeilensensor abgebildet, so haben alle Sensorelemente ungefähr das gleiche Ausgangssignal. Wird ein Körper zwischen der Lichtquelle und der Mattscheibe angeordnet, so werden diese Sensorelemente, auf die der Schatten abgebildet wird, schwächer beleuchtet. Daraus ergibt sich für die zugeordneten Sensorelemente ein geringeres Ausgangssignal. Aus den Indexnummern der Sensorelemente mit abgeschwächtem Ausgangssignal unter zu Hilfenahme des Strahlensatzes können die Lage und Breite bzw. der Durchmesser des Projektils eindeutig bestimmt werden.

Ohne Schlitzscheibe wird der Zeilensensor während des Fluges des Projektiles durch das Licht, welches vor bzw. hinter dem Projektil auf die Mattscheibe und somit auf den Sensor selbst scheinen kann, beleuchtet. Wird zwischen dem Projektil und der Mattscheibe eine Schlitzscheibe mit einem sehr schmalen Schlitz positioniert, so werden die betroffenen Sensorelemente während des Vorbeifluges des Projektiles vollständig abgedeckt.

Ein Problem bei der Erfassung des Projektils stellt die kurze zur Verfügung stehende Betrachtungszeit dar. Bei Projektilgeschwindigkeiten von ca. 200 m/s bis zu 1200 m/s ist die Verweildauer des Projektils in der Zielebene sehr kurz. Beim Einsatz der og. Schlitzscheibe ist für die weitere Betrachtung nur die Dauer der Abdunkelung durch das Projektil entscheidend. Bei einem theoretisch unendlich kleinem Schlitz ergibt sich für die üblichen Projektile, trotz der oben aufgeführten großen Unterschiede in der Projektilgeschwindigkeit, immer eine Verweildauer vor dem Schlitz von ca. 30 Mikrosekunden. Dies hat seine Ursache in den größeren Längen der schnelleren Projektile.

Durch die integrierende Wirkung der Zeilensensoren kann die Integrationszeit und somit die Zeit zwischen zwei Abfragen des Zeilensensors wesentlich größer als die Abschattungszeit ausfallen. Zur Veranschaulichung nehmen wir eine Abfragezeit von 60 Mikrosekunden an. Wird hier während 30 Mikrosekunden der Sensor abgeschattet, so wird der Pegel des Ausgangssignales um die Hälfte niedriger sein als ohne die Abschattung. Allgemein gilt, daß der Ausgangspegel der betroffenen Sensorelemente in dem Verhältnis abgeschwächt ist, wie die Abschattungsdauer zur Abfragezeit steht. Bei steigender Abfragezeit werden somit die Pegelunterschiede immer niedriger.

Werden Zeilensensoren eingesetzt, deren minimale Integrationszeit unter der Abschattungszeit liegen, gelten die hier gemachten Überlegungen immer noch. Nur ist bei der Realisation zu Berücksichtigen, daß sich ein Schattenabbild auf zwei und mehr Abfragezyklen verteilen kann. Der wirtschaftliche Vorteil, langesame und damit kostengünstige Zeilensensoren einsetzen zu können, geht damit allerdings verloren.

Bedingt durch Fertigungstoleranzen von Sensor, Optik, Mattscheibe und Schlitzscheibe sowie Intensitätsstreuungen der verwendeten Licht bzw. Beleuchtungsquelle sind die Ausgangssignale der einzelnen Sensorelemente grundsätzlich voneinander unterschieden. Um aus diesen Unterschieden nicht auf einen Durchflug eines Projektiles zu schließen, werden, zu einem oder mehreren Zeitpunkten, zu denen sichergestellt ist, daß sich kein Projektil in der Zielebene befindet, die Signalpegel der einzelnen Sensorelemente als Referenz in einem Speicher abgelegt.

Zur einfacheren Auswertung eines Meß- bzw. Abfragezykluses werden die Pegelwerte jedes einzelnen Sensorlementes ebenfalls in einem Speicher abgelegt. Die Auswertung kann somit asynchron zu Abfrage erfolgen. Werden für die Abfragen mehrere Speicher bereitgestellt, können entsprechend viele Abfrageergebnisse zur Auswertung herangezogen werden.

Liegt die Zeitspanne zwischen zwei Abfragen des Zeilensensors höher als die maximale Abschattungsdauer der in Frage kommenden Projektile, so tritt immer folgender Effekt auf. Da sich in dieser Konstellation die Abschattung auf maximal zwei Abfragezyklen verteilen kann, muß nach ein oder zwei Abfragezyklen mit geänderten Daten der ursprüngliche Zustand wieder hergestellt sein. Werden mindestens vier Zyklen abgespeichert, kann damit eine Fehlerprüfung eingebaut werden.

Signaländerungen, die sich auf mehr als zwei Abfragezyklen erstrecken werden durch andere Effekte verursacht und brauchen deshalb bei der Signalauswertung nicht weiter als Zeichen für einen Projektildurchflug betrachtet werden. Die Ursachen können z. B. Insekten sein, welche sich in der Zielebene aufhalten oder auch durch Fehlschüsse verursachte herumfliegende Bruchstücke.

Werden nun die Signalpegel der einzelnen Sensorelemente aus einem Abfragezyklus entweder aufaddiert oder aufintegriert, so muß das Ergebnis dieser Operation solange annähernd konstant bleiben, bis ein Schatten auf die Mattscheibe geworfen wird. In diesem Fall muß das Ergebnis obiger Operation niedriger sein. Für die Realisation ist die Integration des Signales mittels eines analogen Integrierers einfacher durchzuführen. Alternativ lassen sich die Ausgangsdaten des Analog-/Digitalwandlers auf der digitalen Seite der Signalverarbeitung einfach aufaddieren.

Alternativ zur oben beschreibenen Integration der Daten aus einem Meß- bzw. Abfragezyklus kann das Ausgangssignal des Zeilensensors auch vorteilhaft einer Fourieranalyse unterzogen werden. Dazu müssen die Steuerinformation aus dem Datenstrom entfernt werden und ein Datenstrom künstlich erzeugt werden, in dem nur die Daten der einzelnen Sensorelemente enthalten sind. Dies kann erreicht werden indem die digitalen Daten wieder in analoge Daten unter Berücksichtigung der geänderten Datenrate zurückgewandelt werden oder die Fourieranalyse direkt mit den digital vorliegenden Daten durchgeführt wird.

Solange sich kein Projektil in der Zielebene befindet, ändert sich das Spektrum der Sensordaten nicht. Sobald ein Projektil durch die Zielebene fliegt, ändert sich das Spektrum geringfügig. Die Änderung ist abhängig von der Abschattungsdauer und der Schattenbreite.

Durch die "rauhe" Umgebung am Einsatzort einer Zielscheibe kann das System in Schwingungen versetzt werden. Dadurch können sich die oben aufgeführten Toleranzen in jedem Abfragezyklus anders auswirken. Die scheinbare Abschattung eines Sensorlementes kann dann nur eine Pegelminderung aufgrund eines Fehlers, z. B. der Mattscheibe, im System sein. Da die Toleranzen selbst innerhalb eines Systems konstant sind und die Schwingungen nur zu einer relativen Verschiebung führen können, kann durch die Kombination der Speicherung der Abfrageergebnisse und der Integration aller Pegel innerhalb eines Abfragezyklusses die Zuverlässigkeit und die Genauigkeit des Ergebnisses signifikant erhöht werden. Die gespeicherten Signale aus der eigentlichen Messung und der Referenzmessung werden so gegeneinander verschoben, daß die Signale in den meisten Punkten übereinstimmen. Nur Daten der abgeschatteten Sensorelemente haben im Meßzyklus einen niedrigeren Wert.

Das Meßergebnis wird durch die Zuordnung der Sensorelemente mit abgeschwächtem Ausgangspegel zu ihrer relativen Lage im gesamten Sensorelement bestimmt. Die Zuordnung des Schattens zum Projektil erfolgt über den allgemein geläufigen Strahlensatz. Die Sensorelemente mit abgeschwächtem Ausgangspegel werden durch Vergleich des Pegels mit dem Pegel des gleichen Sensorelementes aus dem Refenzsignal bestimmt.

Der Aufbau der elektronischen Zielscheibe kann vorzugsweise entweder diskret erfolgen oder mehrer Funktionen werden in einem einzelnen Bauteil zusammengefaßt. So kann die Zielscheibe aus einem Glaszylinder gebildet werden, durch dessen Hohlraum das Projektil fliegt. Die Zylinderaußenwand kann so mattiert und bedruckt bzw. beschichtet werden, daß der gesamte Glaskörper mit Ausnahme des umlaufenden optischen Schlitzes, der an den Seiten der Zeilensensoren mattiert ist, an der Oberfläche undurchsichtig ist.

Zur Kontrolle der Trefferanzeige kann vorzugsweise auch in der Nähe der Zielebene eine konventionelle Zielscheibe so angebracht werden, daß ein Projektil, welches die Zielebene der elektronischen Zielscheibe durchflogen hat unmittelbar danach auf die konventionelle Zielscheibe auftrifft. Die umgekehrte Anordnung, d.h., daß das Projektil zuerst die konventionelle Zielscheibe durchschlägt ist nicht empfehlenswert, da hier bei einem Durchschuß mit zusätzlich herum fliegenden Teilen der konventionellen Zielscheibe zu rechnen ist. Zur Eichung werden ein oder zwei Schüsse auf die Zielscheibe abgegeben. Mit zwei diagonal gegenüberliegenden Einschüssen kann auch die eventuell vorhandene Verdrehung der konventionellen Zielscheibe zuverlässig erkannt und in die elektronische Zielscheibe übertragen werden. Die Trefferlage auf der konventionellen Zielscheibe wird anschließend manuell erfaßt und anschließend der Trefferkennung der elektronischen Zielscheibe bekannt gegeben. Die elektronische Zielscheibe rechnet anschließend die Koordinanten aller ausgewerteten Treffer entsprechend um und bringt diese relativ zur konventionellen Zielscheibe zur Anzeige. Für die Auswertung ist es unerheblich ob zuerst die Schüsse zur Eichung abgegeben werden oder eine beliebige Anzahl von Schüssen auf die Zielscheiben abgegeben und anschließend zwei beliebige Treffer zur Eichung herangezogen werden. Ein Anzeige in Echtzeit kann natürlich nur erfolgen, wenn die elektronische Zielscheibe zuerst geeicht wurde.

Zur einfacheren Eingabe der Trefferlage auf der konventionellen Zielscheibe in die elektronische Zielscheibe kann diese mit einem Bildschirm mit graphischer Ausgabe verbunden werden. Auf dem angeschlossenen Bildschirm wird eine konventionelle Zielscheibe graphisch dargestellt. Zur einfacheren Eingabe kann die Trefferlage nun mit Hilfe eines graphischen Eingabesystems, z. B. einer Maus, in die Darstellung der Zielscheibe eingezeichnet werden.

Der Abgleich des mechanischen Systems läßt sich auch automatisieren. Die Lichtquelle, die beiden Schlitzscheiben, die Mattscheibe und der Zeilensensor sind so anzuordnen, daß der Lichtvorhang senkrecht zur Flugrichtung des Projektiles steht. Die beiden Schlitzscheiben sind dann entsprechend in den Strahlengang einzubringen. Die Mattscheibe ist so anzuordnen, daß der Lichtvorhang senkrecht auftrifft. Parallel zur Mattscheibe ist der Zeilensensor anzuordnen. Die Optik der Lichtquelle ist so einzustellen, daß der Schatten eines in der Mitte der Zielscheiben befindlichen Projektiles möglichst scharf auf der Mattscheibe abgebildet wird. Die Optik zwischen Mattscheibe und Zeilensensor ist so einzustellen, daß der auf der Mattscheibe abgebildete Schatten scharf auf den Zeilensensor projeziert wird.

Gerade in der "rauhen" Umgebung beim Einsatz der elektronischen Zielscheibe auf einem Schießplatz, bietet der automatische Abgleich oben beschriebener Einstellungen einige Vorteile. Abhängig von den speziellen Einsatzbedingungen, kann es sinnvoll sein, nicht alle Parameter automatisch abgleichbar zu gestalten. Besonders interessant ist der automatische Abgleich der Position des Zeilensensors. Aufgrund der geringen Abmessungen der einzelnen Sensorelemente ist der gesamte Sensor möglichst genau auszurichten.

Die Ausrichtung kann mit Hilfe von verschiedenen bekannten Servosystemen geschehen. Die Information über die optimale Lage des Sensors kann aus seinem Ausgangssignal entnommen werden. Wird der Sensor senkrecht zur Lichtstrahlung und senkrecht zu der Anordnung der Sensorelemente bewegt, kann die Mitte des Lichtvorhanges gesucht werden. Wird der Sensor anschließend in derselben Ebene verdreht, so können die einzelnen Sensorelemente genau parallel zum Strahlenvorhang ausgerichtet werden.

Der Zeilensensor ist dann optimal eingestellt, wenn der Unterschied zwischen den Signalpegeln des Sensorelementes mit der besten und der schlechtesten Beleuchtung minimal wird und dabei das durchschnittliche Ausgangssignal aller Sensorelemente bei unveränderter Beleuchtung ein Maximum annimmt.

Weitere Vorteile und Ausgestaltungen der Erfindung ergeben sich aus der nachfolgenden Beschreibung bevorzugter Ausführungsbeispiele. In der Beschreibung wird auf die beigefügte, schematische Zeichnung Bezug genommen. In der Zeichnung zeigen:
- Figur 1: den Aufbau einer Vorrichtung zur Erfassung bzw. Detektion eines Projektils der erfindungsgemäßen elektronischen Zielscheibe;
- Figur 2: eine vergrößerte Seitenansicht eines Projektils, während des Durchfluges durch die Zielscheibe;
- Figur 3: eine vergrößerte Aufsicht eines teilweise abgedunkelten Lichtdetektors;
- Figur 4: eine Variante des Aufbaus von Fig. 1;
- Figur 5: einen weiteren Aufbau einer Vorrichtung zur Erfassung bzw. Detektion eines Projektils der erfindungsgemäßen elektronischen Zielscheibe;
- Figur 6: das idealisierte Ausgangssignal eines Zeilensensors;
- Figur 7: das Ausgangssignal eines Zeilensors aus zwei verschiedenen Abfragen;
- Figur 8: das Integral des Ausgangssignales eines Zeilensensors;
- Figur 9: den inneren Aufbau einer erfindungsgemäßen Systemsteuerung im Blockschaltbild;
- Figur 10: den inneren Aufbau einer Vorrichtung zur Koordinatenbestimmung als Blockschaltbild im Detail;
- Figur 11: den inneren Aufbau des Integrators im Blockschaltbild;

In den Figuren sind diesselben Merkmale mit denselben Bezugszeichen gekennzeichnet.

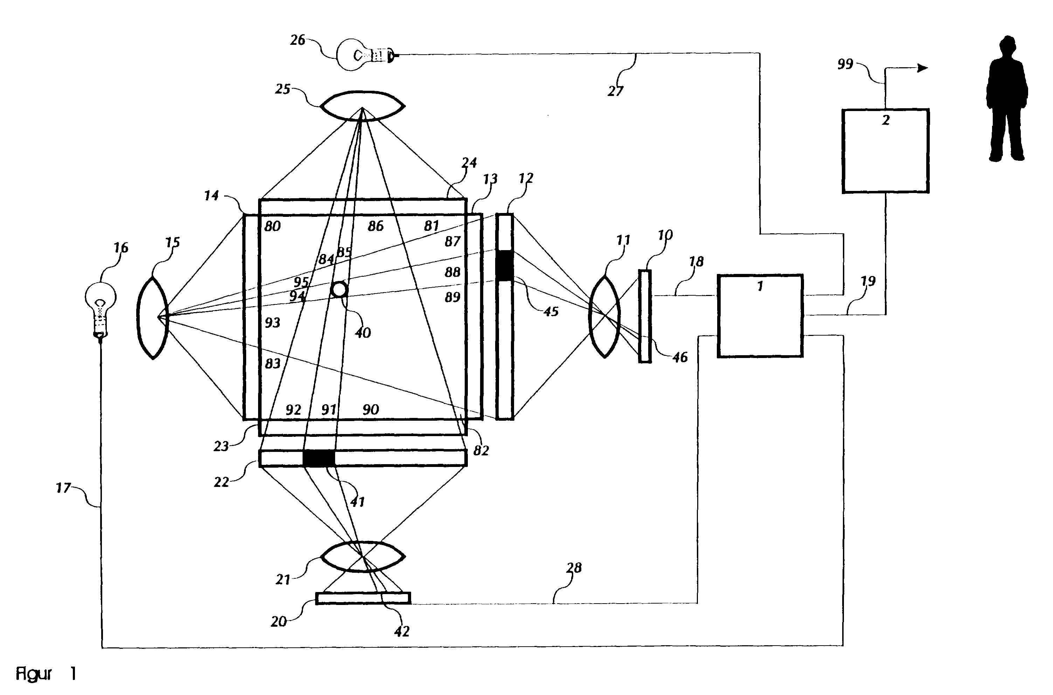

Figur 1 zeigt ein bevorzugtes Ausführungsbeispiel einer Vorrichtung zur Erfassung bzw. Detektion eines Projektils der erfindungsgemäßen elektronischen Zielscheibe

Eine Lichtquelle 16 beleuchtet über eine Optik 15 eine Mattscheibe 12. Eine Optik 11 bildet die Schattenprojektion 45 eines Projektils 40 auf der Mattscheibe 12 auf einen Zeilensensor 10 ab. Mittels einer Leitung 18 tauscht der Zeilensensor 10 die gewonnene Information mit einer Systemsteuerung 1 aus. Mittels einer Leitung 17 stellt die Systemsteuerung die Beleuchtungsstärke des Zeilensensors 10 durch die Lichtquelle 16 ein.

In den Strahlengang der Lichtquelle 16 sind Schlitzscheiben 14 und 13 eingebracht.

Eine Lichtquelle 26 beleuchtet über eine Optik 25 eine Mattscheibe 22. Eine Optik 21 bildet die Schattenprojektion des Projektils 40 auf der Mattscheibe 22 auf einen Zeilensensor 20 ab. Mittels einer Leitung 28 tauscht der Zeilensensor 20 die gewonnene Information mit der Systemsteuerung 1 aus. Mittels einer Leitung 27 stellt die Systemsteuerung 1 die Beleuchtungsstärke des Zeilensensors 20 durch die Lichtquelle 26 ein.

In den Strahlengang der Lichtquelle 26 sind Schlitzscheiben 24 und 23 eingebracht.

Die elektronische Systemsteuerung 1 koordiniert alle Abläufe und berechnet die Lage des Projektils. Mittels einer Leitung 19 gibt die Systemsteuerung 1 die gewonnene Information an eine Anzeigeeinheit 2 weiter. Diese stellt das Ergebnis in der gewünschten Form dar.

Befindet sich das Projektil 40 in der Zielebene der Zielscheibe, so wirft es zwei Schatten 41 und 45. Der Schatten 41 wird aufgrund der Beleuchtung durch die Lichtquelle 26 verursacht. Der Schatten 41 wird durch die Optik 21 auf den Zeilensensor 20 als ein Schattenabbild 42 abgebildet. Der Schatten 45 wird aufgrund der Beleuchtung durch die Lichtquelle 16 verursacht. Der Schatten 45 wird durch die Optik 11 auf den Zeilensensor 10 als ein Schattenabbild 46 abgebildet.

Durch die Verwendung punktförmiger Lichtquellen 16 und 26 entstehen - bei gegebener Spaltlänge der Schlitzscheiben 13, 14 bzw. 23, 24 - Zonen 80-83, die von keiner der beiden Lichtquellen 16, 26 beleuchtet werden und Zonen 84-95, die nur von einer der beiden Lichtquellen 16, 26 beleuchtet werden. Durchfliegt ein Projektil 40 die Zielebene in einer der Zonen 80-95, kann die Trefferlage nicht bestimmt werden. Für die Ausgestaltung der elektronischen Zielscheibe bedeutet dies, daß die virtuelle Zielfläche innerhalb des inneren Bereichs liegen muß, die durch die Zonen 80-95 umschlossen ist. Die Zielfläche bei den üblichen Zielscheiben wird als Kreis dargestellt. Wird der Zielkreis in den inneren Bereich eingepaßt, entsteht keine Einschränkung in der praktischen Anwendung.

Der Benutzer kann mittels einer visuellen Ausgabe 99 das Schießergebnis in der gewohnten Art und Weise ablesen. Die optischen Achsen zwischen den Optiken 15 und 11 und den Optiken 25 und 21 stehen senkrecht zueinander.

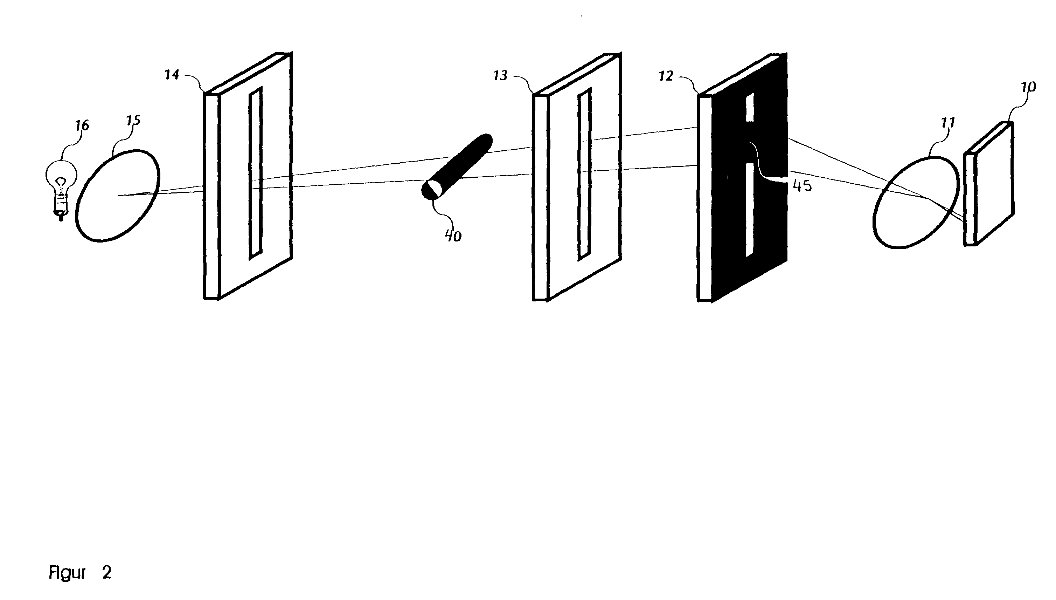

Figur 2 stellt die Projektionen beim Durchflug eines Projektils 40 durch die elektronische Zielscheibe detailierter dar. Es wird nur eine Dimension gezeigt. Die Lichtquelle 16 beleuchtet über die Optik 15 die Mattscheibe 12. In den Strahlengang eingebracht sind die beiden Schlitzscheiben 13 und 14. Mittels der Optik 11 wird das Schattenabbild 45 auf der Mattscheibe 12 auf den Zeilensensor 10 abgebildet.

Beim Durchflug durch die Zielebene wird das Projektil 40 durch die Lichtquelle 16 beleuchtet. Der entstehende Schatten 45 wird auf die Mattscheibe 12 abgebildet. Die Abbildung des Schattens 45 erfolgt entsprechend des Strahlensatzes. Dieser ist auch als Vierstreckensatz allgemein bekannt.
Die beiden Schlitzbleche 13 und 14 dienen mehreren Zwecken. Einerseits schützen sie den Aufbau vor Querschlägern. Andererseits wird durch den Schlitz der Scheibe 13 der Zeilensensor 10 vor Streulicht geschützt. Zusätzlich bewirkt - während sich ein Projektil 40 in der Zielebene zwischen beiden Scheiben 13 und 14 befindet - die Schlitzscheibe 13 eine vollständige Abdeckung der, der Flughöhe zugeordneten Zeilenelemente im Zeilensensor 10.

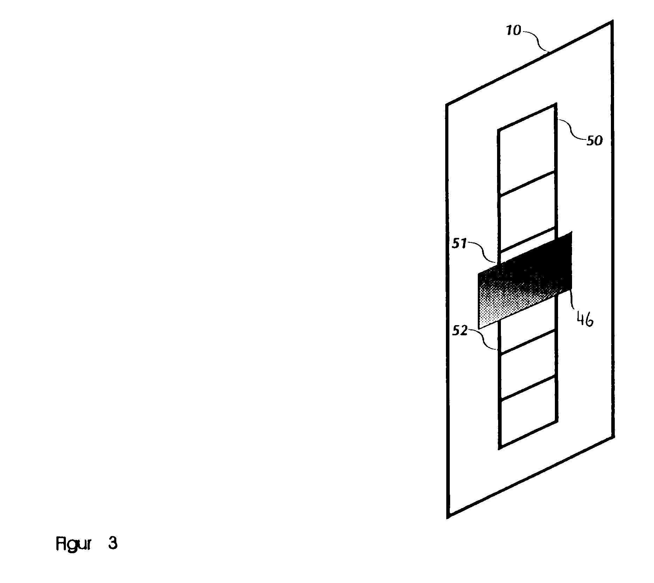

Figur 3 zeigt einen stilisierten Zeilensensor 10. Der Zeilensensor 10 besteht aus in einer Reihe angeordneten Sensorelementen 50, 51, 52. Sobald das Projektil 40 zwischen die Lichtquelle 16 und die Mattscheibe 12 gelangt, werden die Sensorelemente 51, 52 durch den Schatten 46 abgedeckt. Das Ausgangssignal der betroffenen Sensorelemente 51 und 52 wird dadurch bei der nächsten Abfrage niedriger sein.

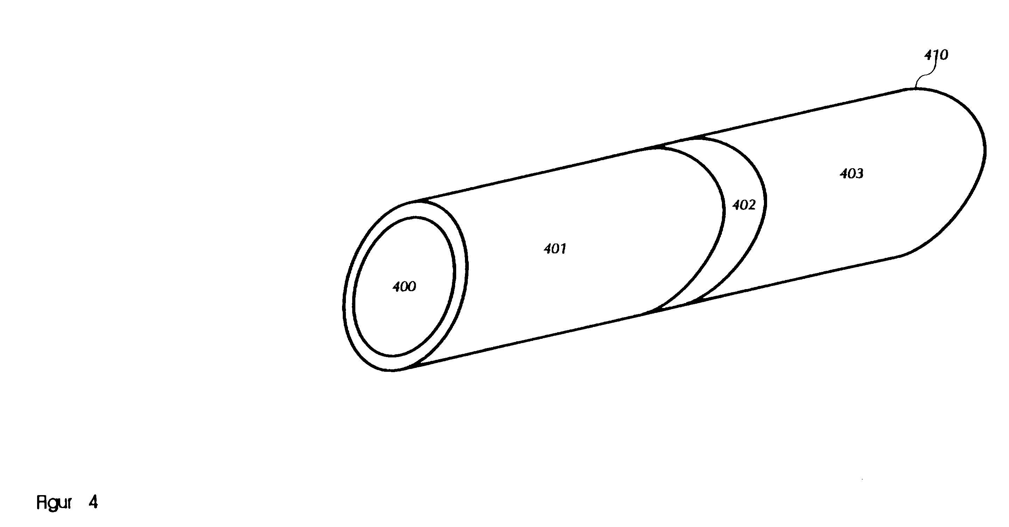

Figur 4 zeigt einen alternativen mechanischen Aufbau zur Vorrichtung in Fig. 1. Ein aus einem für die eingesetzte Strahlung durchsichtigem Material - z. B. Glas - gefertigter Zylinder 410 wird so angeordnet, daß das Projektil 40 an seiner Eintrittsöffnung 400 in den Zylinder 410 einfliegen kann. Der Zylinder 410 wird an seinem Umfang vollständig in zwei getrennten Zonen 401 und 403 so beschichtet, daß er für die eingesetzte Strahlung senkrecht zur Flugrichtung des Projektils 40 undurchsichtig wird. Zwischen den beschichteten Zonen 401 und 403 befindet sich eine unbeschichtete Zone 402. Auf den beiden Seiten der Lichtquellen 16 und 26 dient die Zone 402 als einfacher optischer Schlitz. Auf den beiden Seiten der Zeilensensoren dient die Zone 402 als Schlitz und gleichzeitig als Mattscheibe. Um punktförmige Lichtquellen 16 und 26 benutzen zu können, ist die Mattierung über den Umfang der unbeschichteten Zone 402 so zu verteilen, daß auf den Seiten der Lichtquellen 16 und 26 das eintreffende Licht nicht gestreut wird und gegenüber den beiden Zeilensensoren 10, 20 des Zylinders 410 mattiert ist.

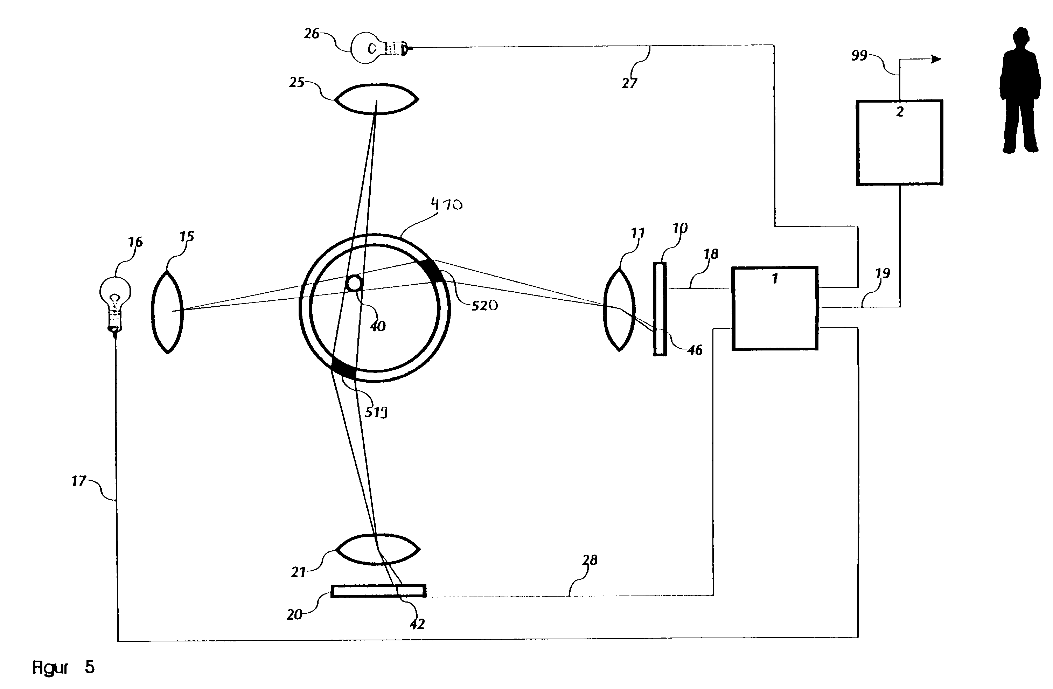

Figur 5 zeigt einen alternativen Aufbau der elektronischen Zielscheibe. Das Licht der Lichtquelle 16 wird über die Optik 15 auf den Zylinder 410 gerichtet. Befindet sich das Projektil 40 in der Zielebene, entsteht auf der gegenüberliegenden Seite des Zylinders 410 ein Schattenabbild 520 des Projektils 40. Das Schattenabbild 520 wird mittels der Optik 11 auf den Zeilensensor 10 projeziert. Die Optik 11 muß dabei so ausgelegt sein, daß die Krümmung des Zylinders 50 korrigiert wird. Das Ausgangssignal des Zeilensensors 10 wird über die Signalleitung 18 der Systemsteuerung 1 zugeführt.

Das Licht der Lichtquelle 26 wird über die Optik 25 auf den Zylinder 410 gerichtet. Befindet sich ein Projektil 40 in der Zielebene, entsteht auf der gegenüberliegenden Seite des Zylinders 410 ein Schattenabbild 519 des Projektils 40. Das Schattenabbild 519 wird mittels der Optik 21 auf den Zeilensensor 20 projeziert. Die Optik 21 muß dabei so ausgelegt sein, daß die Krümmung des Zylinders 50 korrigiert wird. Das Ausgangssignal des Zeilensensors 20 wird über die Signalleitung 28 der Systemsteuerung 1 zugeführt.

Die optischen Achsen zwischen den Optiken 15 und 11 und den Optiken 25 und 21 stehen senkrecht zueinander.

Die Lichtquelle 16 ist mittels der Signalleitung 17 mit der Systemsteuerung 1 verbunden. Die Systemsteuerung 1 stellt über die Signalleitung 17 die Helligkeit der Lichtquelle 16 ein.

Die Lichtquelle 26 ist über die Signalleitung 27 mit der Systemsteuerung 1 verbunden. Die Systemsteuerung 1 stellt über die Signalleitung 27 die Helligkeit der Lichtquelle 26 ein.

Der Zeilensensor 10 ist über die Signalleitung 18 mit der Systemsteuerung 1 verbunden. Der Zeilensensor 10 überträgt über die Signalleitung 18 die Bilddaten an die Systemsteuerung 1.

Der Zeilensensor 20 ist über die Signalleitung 28 mit der Systemsteuerung 1 verbunden. Der Zeilensensor 20 überträgt über die Signalleitung 28 die Bilddaten an die Systemsteuerung 1.

Die Systemsteuerung 1 ist über die Signalleitung 19 mit der Anzeigeeinheit 2 verbunden. Die Systemsteuerung 1 überträgt über die Signalleitung 19 die Daten zur Anzeige an die Anzeigeneinheit 2.

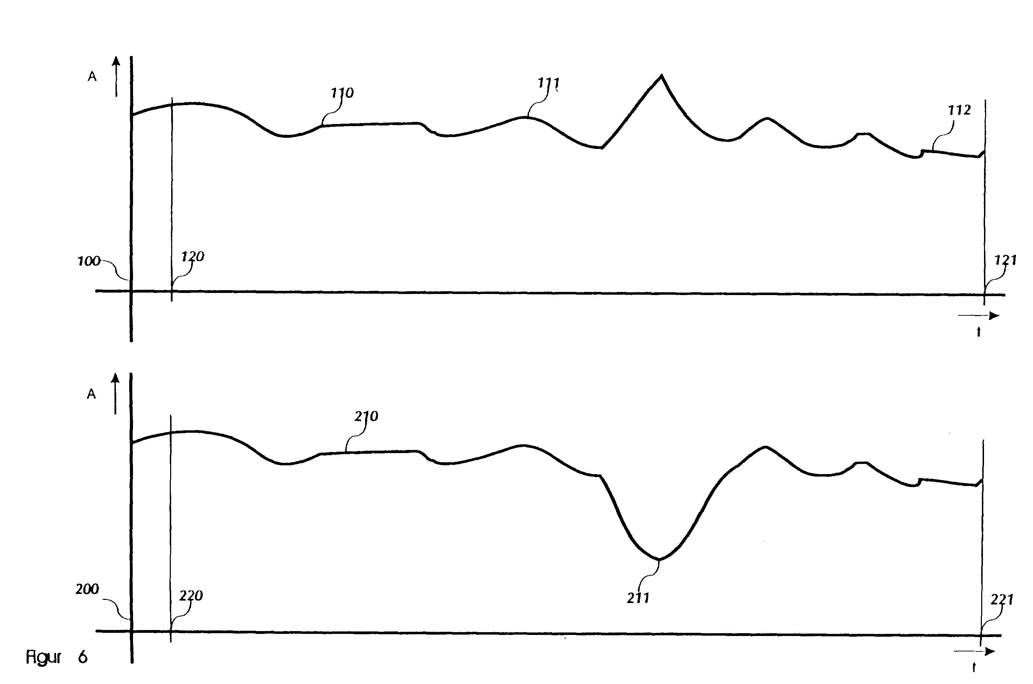

Figur 6 zeigt am Beispiel zweier Diagramme 100, 200 idealisierte Ausgangssignale 110, 210 eines Zeilensensors 10, 20. Auf der X-Achse ist jeweils die Zeit aufgetragen. Auf der Y-Achse ist jeweils die Signalamplitude aufgetragen. Das Diagram 100 stellt das Ausgangssignal 110 des Zeilensensors 10 oder 20 aus der elektronischen Zielscheibe ohne Projektil 40 in der Zielebene dar. Innerhalb eines Meßzykluses - zwischen Abfragezeitpunkten 120 und 121 - werden die zu einem Zeitpunkt 120 an den einzelnen Sensorelementen 50, 51 oder 52 anliegenden Ausgangsspannungen sequentiell ausgelesen. Die Reihenfolge des Auslesens der Ausgangsspannungen ist abhängig vom verwendeten Zeilensensor 10, 20. Zur Vereinfachung der Darstellung wird angenommen, daß zum Zeitpunkt 120 das Ausgangssignal des ersten Sensorelementes 50 ausgegeben wird.

Anstelle der zu erwartenden Uniformität des dargestellten Ausgangssignales 110 zeigen sich signifikante Unterschiede in den Signalpegeln - z. B. 111 und 112 - der einzelnen Sensorelemente 50, 51 oder 52.

Das Diagramm 200 stellt das Ausgangssignal 210 des Zeilensensors 10 oder 20 aus der elektronischen Zielscheibe mit Projektil 40 in der Zielebene dar. Der zeitliche Verlauf des Ausgangssignals 210 entspricht weitgehend dem zeitlichen Verlauf des Ausgangssignals 110 - nunmehr zwischen Abfragezeitpunkten 220 und 221 eines Meßzyklus. Im Bereich einiger Sensorelemente 50, 51 oder 52 zeigt das Ausgangssignal 210 einen deutlichen Einbruch 211. Dieser hier deutlich hervorgehobene Einbruch 211 wird von einer Abschattung der Sensorelemente 51, 52 durch ein Projektil 40 verursacht. Die Lage des Signaleinbruches 211 relativ zum Beginn des Abfragezeitpunktes 220 stellt ein Maß für die absolute Position des Projektils 40 in der Zielebene dar.

Für die Auswertung werden die Ausgangssignale 110 und 210 so lange zueinander verschoben, bis die Differenz aus beiden Signalen 110 und 210 ein Minimum annimmt.

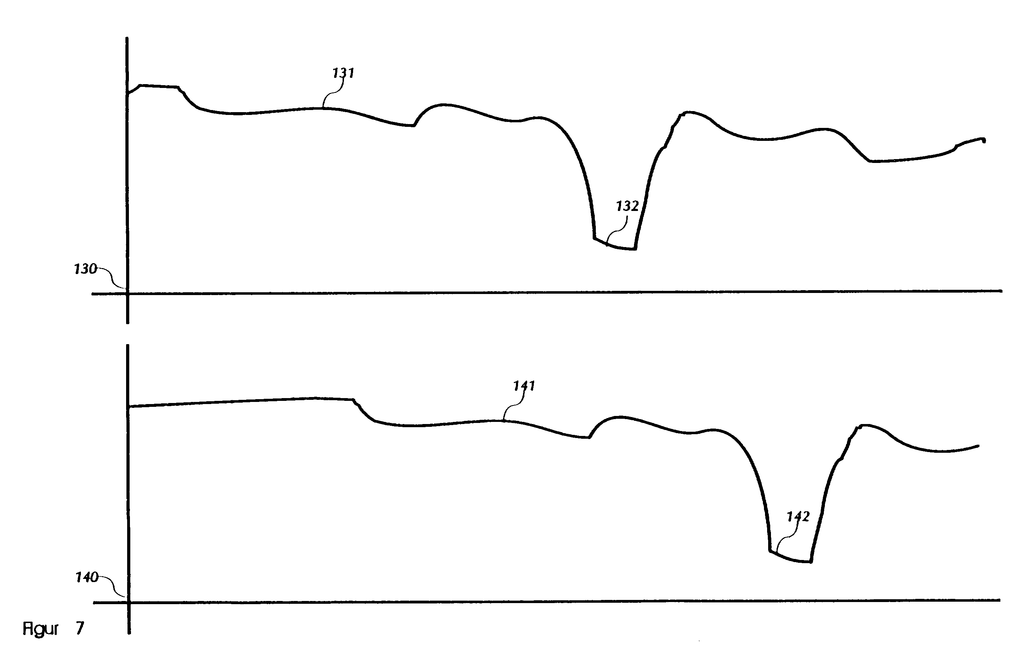

Figur 7 zeigt in zwei Diagrammen 130, 140 Ausgangssignale 131 und 141 des Zeilensors 10 oder 20 aus zwei verschiedenen Abfragen.

Das Diagram 130 zeigt das Ausgangssignal 131 eines Zeilensensors 10 oder 20 während der ersten Abfrage. Das Diagram 140 zeigt das Ausgangssignal 141 desselben Zeilensensors 10 oder 20 während einer weiteren Abfrage. Während die Abfragen stattfinden, ist der gesamte Aufbau der elektronischen Zielscheibe in Vibrationen versetzt worden.

Durch die Schwingungen finden, hier allerdings stark vergrößert dargestellt, leichte Verschiebungen zwischen den einzelnen Elementen 10-16 und 20-26 des Aufbaues der elektronischen Zielscheibe statt. Entsprechend wird das Ausgangssignal 141 verändert. Abhängig von der Verschiebungsrichtung werden Bildinformationen über das eine Ende des Zeilensensors 10 bzw. 20 hinausgeschoben, während neue Informationen am anderen Ende des Zeilensensors 10 bzw. 20 dargestellt werden.

Aufgrund der hohen Auflösung der eingesetzten Zeilensensoren 10, 20 reichen bereits wenige Mikrometer aus, um diesen Effekt zu verursachen.

Aus der Verschiebung der Signale 131 und 141 zueinander darf nicht auf einen Treffer geschlossen werden. Die Verschiebung zwischen den Signalen 131 und 141 verändert sich mit der Schwingung der elektronischen Zielscheibe. Die Verschiebung wird besonders in den Bereichen einer Abschattung 132 und 142 deutlich.

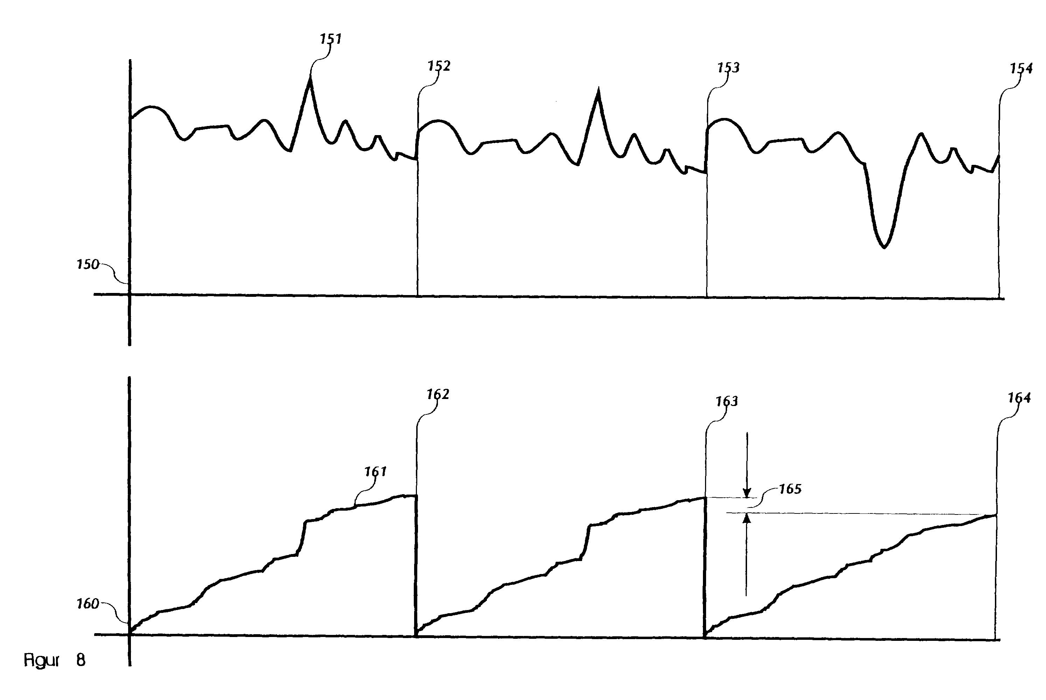

Figur 8 zeigt in zwei Diagrammen 150, 160 das Integral eines Ausgangssignales 151 der Zeilensensoren 10 oder 20. Wird das Signal 151 aus dem Diagram 150 mittels eines Integrators integriert, der immer am Anfang eines Abfragezeitpunktes 152, 153 oder 154 bzw. 162, 163 oder 164 zurückgesetzt wird, so entspricht dessen Ausgangssignal 161 in etwa der Kurve aus dem Diagram 160.

Der zeitliche Verlauf des Ausgangssignals 151 zeigt zwischen den Abfragezeitpunkten 152 und 153 einen Ausschnitt des Ausgangssignals 151, welches am Ausgang der Zeilensensoren 10 oder 20 ohne Abschattung anliegt. Zwischen den Zeitpunkten 153 und 154 zeigt das Ausgangssignal 151 eine Abschattung an.

Der zeitliche Verlauf des Ausgangssignals 161 zeigt zwischen den Abfragezeitpunkten 162 und 163 das typische Integral des Ausgangssignales 151 eines Zeilensensors 10 oder 20 ohne Abschattung an. Zwischen den Zeitpunkten 163 und 164 trat - wie in der Fig. 8 dargestellt - eine Abschattung des zugeordneten Zeilensensors 10 oder 20 auf. Der Wert des Integrals zum Zeitpunkt 164 erreicht dann nicht den Wert des Integrales zum Zeitpunkt 163. Übersteigt eine Differenz 165 der Integralwerte am Ende eines Abfragezyklusses aus verschiedenen Abfragen einen bestimmten Wert, ist vermutlich ein Projektil 40 in die Zielebene gelangt. Ist gleichzeitig noch eine Abschattung im Ausgangssignal 151 im selben Zeitraum feststellbar, so ist sicher ein Projektil 40 in die Zielebene gelangt.

Durch Vergleich der Integralwerte am Ende einer Auslesesequenz kann somit zuverlässig und mit wenig Aufwand der Durchflug eines Projektils 40 erkannt werden.

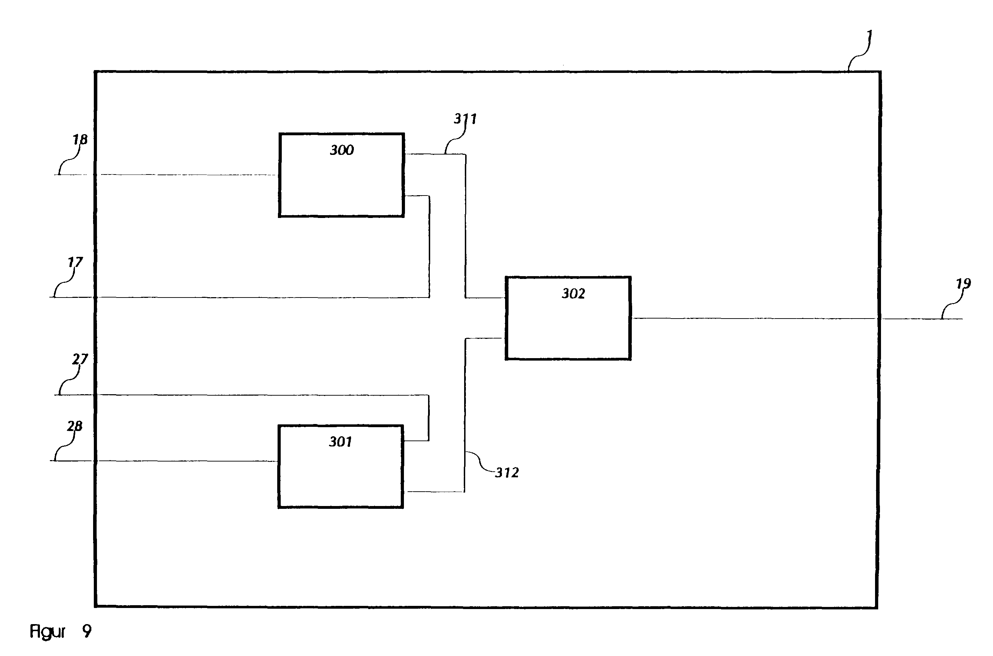

Figur 9 zeigt den inneren Aufbau der Systemsteuerung 1. Über die Leitung 18 ist eine X-Koordinatenbestimmung 300 mit dem Zeilensensor 10 verbunden. Über die Leitung 17 ist die X-Koordinatenbestimmung 300 weiterhin mit der Lichtquelle 16 verbunden.

Über die Leitung 28 ist eine Y-Koordinatenbestimmung 301 mit dem Zeilensensor 20 verbunden. Über die Leitung 27 ist die Y-Koordinatenbestimmung 301 weiterhin mit der Lichtquelle 26 verbunden.

Über eine Leitung 311 ist die X-Koordinatenbestimmung 300 mit einer Trefferlagenberechnungseinheit 302 verbunden. Über eine Leitung 312 ist die Y-Koordinatenbestimmung 301 mit der Trefferlagenberechnungseinheit 302 verbunden.

Über die Leitung 18 tauscht die X-Koordinatenbestimmung 300 die Daten mit dem Zeilensensor 10 aus. Über die Leitung 28 tauscht die Y-Koordinatenbestimmung 301 die Daten mit dem Zeilensensor 20 aus.

Über die Leitung 311 tauscht die X-Koordinatenbestimmung 300 die Koordinatendaten mit der Trefferlagenberechungseinheit 302 aus. Über die Leitung 312 tauscht die Y-Koordinatenbestimmung 301 die Koordinaten mit der Trefferlagenberechnungseinheit 302 aus.

Die Trefferlagenberechnungseinheit 302 ist über die Signalleitung 19 mit der Anzeigeeinheit 2 verbunden. Über die Leitung 19 gibt die Trefferlagenberechnungseinheit 302 die Trefferkoordinaten an die Anzeigeeinheit 2 weiter.

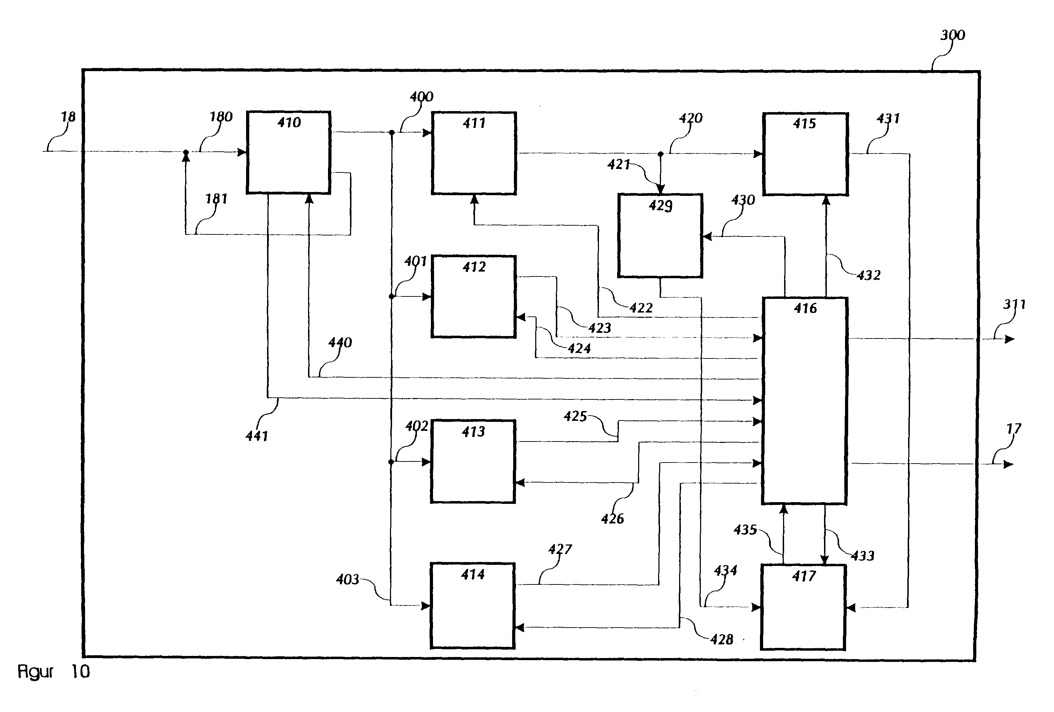

Figur 10 zeigt eine Vorrichtung für die X-Koordinatenbestimmung 300 im Detail. Im folgenden wird nur der innere Aufbau einer Vorrichtung für die X-Koordinatenbestimmung erläutert. Der innere Aufbau einer Vorrichtung für die Y-Koordinatenbestimmung ist völlig analog aufgebaut.

Eine Detektorsteuereinheit - hier eine Zeilensensorkontrollogik 410 - ist über die Leitung 18 mit dem Zeilensensor 10 verbunden. Ein Signal 180 der Leitung 18 enthält die Bilddaten des Zeilensensors 10. Die Bilddaten werden über die Leitung 18 der Zeilensensorkontrollogik 410 zugeführt. Ein Signal 181 der Leitung 18 enthält die Daten zur Steuerung des Zeilensensors 10. Die Zeilensensorkontrollogik 410 ist über eine Signalleitung 400 mit einem Analog-/Digitalwandler 411 verbunden. Über die Signalleitung 400 werden dem Analog-/Digitalwandler 411 die aktuellen analogen Bilddaten zur Wandlung in digitale Bilddaten übertragen.

Die Zeilensensorkontrollogik 410 ist über eine Signalleitung 401 mit einem Maximalwertdetektor 412 verbunden. Über die Signalleitung 401 werden dem Maximalwertdetektor 412 die aktuellen analogen Bilddaten zur Bestimmung des maximalen Signalpegels und zur Bestimmung des Zeitpunktes des Auftretens des maximalen Signalpegels innerhalb eines Abfragezyklusses übertragen.

Die Zeilensensorkontrollogik 410 ist über eine Signalleitung 402 mit einem Minimalwertdetektor 413 verbunden. Über die Signalleitung 402 werden dem Minimalwertdetektor 413 die aktuellen analogen Bilddaten zur Bestimmung des minimalen Signalpegels und zur Bestimmung des Zeitpunktes des Auftretens des minimalen Signalpegels innerhalb eines Abfragezyklusses übertragen.

Die Zeilensensorkontrollogik 410 ist über eine Signalleitung 403 mit einem Integrator 414 verbunden. Über die Signalleitung 403 werden dem Integrator 414 die aktuellen analogen Bilddaten zur Integration übertragen.

Eine Recheneinheit bzw. Auswertesteuerung 416 ist über eine Signalleitung 440 mit der Zeilensensorkontrollogik 410 verbunden. Die Zeilensensorkontrollogik 410 ist über eine Signalleitung 441 mit der Auswertesteuerung 416 verbunden. Die Zeilensensorkontrollogik 410 wird über die Signalleitung 440 von der Auswertesteuerung 416 gesteuert. Die Zeilensensorkontrollogik 410 teilt über die Signalleitung 441 der Auswertesteuerung 416 die Daten zur Synchronisation der Abläufe mit.

Der Analog-/Digitalwandler 411 ist über eine Signalleitung 420 mit einem Referenzwertspeicher 415 verbunden. Der Analog-/Digitalwandler 411 ist über eine Signalleitung 421 mit einem Meßwertspeicher 429 verbunden.

Der Analog-/Digitalwandler 411 stellt die gewandelten Daten als digitalen Datenstrom über die Signalleitung 420 dem Referenzwertspeicher 415 zur Vefügung. Der Analog-/Digitalwandler 411 stellt die gewandelten Daten als digitalen Datenstrom über die Signalleitung 421 dem Meßwertspeicher 429 bereit.

Der Maximalwertdetektor 412 ist über eine Signalleitung 423 mit der Auswertesteuerung 416 verbunden. Die Auswertesteuerung 416 ist über eine Signalleitung 424 mit dem Maximalwertdetektor 412 verbunden. Der Maximalwertdetektor 412 überträgt mittels der Signalleitung 423 den Zeitpunkt und den Pegel des Maximalwerts im letzten vollständigen Abfragezyklus. Die Auswertesteuerung 416 teilt über die Signalleitung 424 dem Maximalwertdetektor 412 die Daten zur Synchronisation mit dem Abfragezyklus mit.

Der Minimalwertdetektor 413 ist über eine Signalleitung 425 mit der Auswertesteuerung 416 verbunden. Die Auswertesteuerung 416 ist über eine Signalleitung 426 mit dem Minimalwertdetektor 413 verbunden. Der Minimalwertdetektor 413 teilt über die Signalleitung 425 den Zeitpunkt und den Pegel des Signalminimums im letzten Abfragezyklus der Auswertesteuerung 416 mit. Die Auswertesteuerung 416 teilt über die Signaleitung 426 dem Minimalwertdetektor 413 die Daten zur Synchronisation mit dem Abfragezyklus mit.

Der Integrator 414 bildet aus den Daten eines Abfragezyklusses den Integralwert, legt diesen in einem Speicher ab und ermittelt aus dem Vergleich der Integralwerte der verschiedenen Abfragezyklen, ob eventuell ein Projektil durch die Zielebene flog.

Der Integrator 414 ist über eine Signalleitung 427 mit der Auswertesteuerung 416 verbunden. Die Vermutung, daß ein Projektil 40 durch die Zielebene flog, wird mittels der Signalleitung 428 der Auswertesteuerung 416 mitgeteilt.

Die Auswertesteuerung 416 ist über eine Signalleitung 428 mit dem Integrator 414 verbunden. Über die Signalleitung 427 werden von der Auswertesteuerung 416 die Daten zur Synchronisation an den Integrator 416 übertragen.

Die Auswertesteuerung 416 ist über eine Signalleitung 432 mit dem Referenzwertspeicher 415 verbunden. Über die Signalleitung 432 teilt die Auswertesteuerung 416 dem Referenzwertspeicher 415 mit, welche Daten von der Signalleitung 420 im Referenzwertspeicher 415 abgelegt werden sollen und welche Daten aus dem Referenzwertspeicher 415 über eine Signalleitung 431 an einen Vergleicher bzw. Komparator 417 ausgegeben werden sollen. Dazu ist der Referenzwertspeicher 415 über die Signalleitung 431 mit dem Vergleicher 417 verbunden.

Die Auswertesteuerung 416 ist über eine Signalleitung 430 mit dem Meßwertsspeicher 429 verbunden. Über die Signalleitung 430 teilt die Auswertesteuerung 416 dem Meßwertspeicher 429 mit, welche Eingangsdaten von der Signalleitung 421 abgespeichert werden sollen und welche abgespeicherten Daten über eine Signalleitung 434 an den Vergleicher 417 ausgegeben werden sollen. Dazu ist der Meßwertspeicher 429 über die Signalleitung 434 mit dem Vergleicher 417 verbunden.

Die Auswertesteuerung 416 ist über eine Signalleitung 433 mit dem Vergleicher 417 verbunden. Der Vergleicher 417 ist über eine Signalleitung 435 mit der Auswertesteuerung 416 verbunden.

Die Auswertesteuerung 416 steuert über die Signalleitung 433 den Vergleicher 417. Der Vergleicher 417 teilt über die Signalleitung 435 der Auswertesteuerung 416 das Vergleichsergebnis mit.

Die Auswertesteuerung 416 ist über eine Leitung 422 mit dem Analog/Digitalwandler 411 verbunden. Die Signalleitung 422 überträgt dem Analog/Digitalwandler 411 die Daten zur Synchronisation.

Der Vergleicher 417 ermittelt durch Vergleich der Daten aus einem Meßzyklus mit den Daten aus einem Referenzzyklus die Trefferlage im Meßwert.

Die Auswertesteuerung 416 ist über die Signalleitung 311 mit der Trefferlagenberechnungseinheit 302 verbunden.

Die Auswertesteuerung 416 teilt der Koordinatenbestimmungseinheit 302 über die Signalleitung 311 die Daten des Projektildruchfluges mit.

Die Auswertesteuerung 416 steuert über die Signalleitung 17 die Helligkeit der Lichtquelle 16. Die Helligkeit der Lichtquelle 16 wird von der Auswertesteuerung 416 so eingestellt, daß das Ausgangssignal des am stärksten durch die Lichtquelle 16 beleuchteten Sensorelementes des Zeilensensors 10 gerade den maximal zulässigen Pegel für Vollaussteuerung erreicht oder geringfügig darunter liegt.

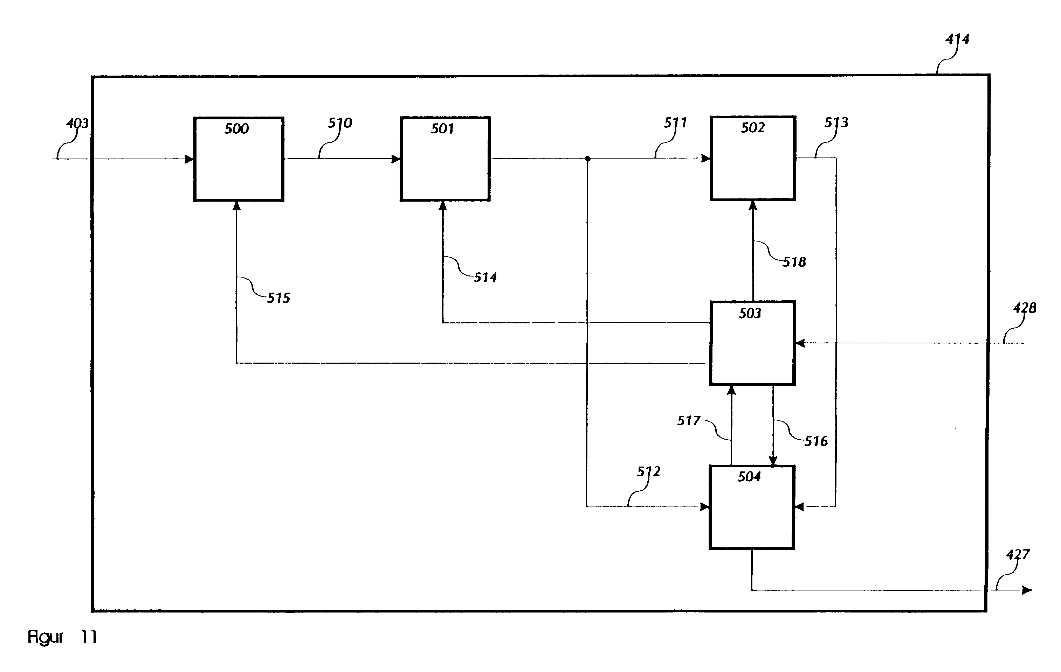

Figur 11 zeigt den Aufbau des Integrators 414. Über die Signalleitung 403 ist ein Integrationselement 500 mit der Zeilensensorkontrollogik 410 verbunden. Die Signalleitung 403 überträgt die Bilddaten des Zeilensensors 10. Das Integrationselement 500 bildet aus den Daten eines Bildes des Zeilensensors 10 das Integral.

Das Integrationselement 500 ist über eine Signalleitung 510 mit einem Analog-/Digitalwandler 501 verbunden. Das Integrationslement 500 überträgt über die Signalleitung 510 das Integral des Eingangssignales an den Analog-/Digitalwandler 501. Der Analog-/Digitalwandler 501 wandelt das Integrationsergebnis in ein digitales Signal um.

Der Analog-/Digitalwandler 501 ist über eine Signalleitung 511 mit einem Speicher 502 verbunden. Der Analog-/Digitalwandler 501 ist über eine Signalleitung 512 mit einem Vergleicher 504 verbunden.

Das digitale Ausgangssignal des Analog-/Digitalwandler 501 wird über die Signalleitung 511 zum Speicher 502 übertragen. Das digitale Ausgangssignal des Analog-/Digitalwandlers 511 wird über die Signalleitung 512 zum Vergleicher 504 übertragen.

In dem Speicher 502 werden ausgewählte Integralergebnisse abgelegt. Die Auswahl wird von einer Integrationssteuerung 503 getroffen.

Der Speicher 502 ist über eine Signalleitung 513 mit dem Vergleicher 504 verbunden. Über die Leitung 513 werden ausgewählte Referenzwerte für das Integral eines Meßzyklusses an den Vergleicher 504 übertragen.

Der Vergleicher 504 vergleicht das Integral des letzten vollständigen Meßzyklusses mit dem Integral eines Meßzyklusses, innerhalb welchem sicher kein Projektil die Zielebene durchflog.

Der Vergleicher 504 ist über eine Signalleitung 516 mit der Integrationssteuerung 503 verbunden. Der Vergleicher 504 ist über eine Signalleitung 517 mit der Integrationssteuerung 503 verbunden.

Über die Signalleitung 516 synchronisiert die Integrationssteuerung 503 die Vergleichsoperation. Über die Signalleitung 517 übermittelt der Vergleicher das Vergleichsergebnis.

Die Integrationssteuerung 503 ist über eine Signalleitung 518 mit dem Speicher 502 verbunden. Die Integrationssteuerung 503 steuert über die Signalleitung 518 das Ablegen der Integrationsergebnisse über die Signalleitung 511 im Speicher 502 und das Auslesen der Integrationsergebnisse als Referenzwert für den Vergleicher 504 über die Signalleitung 513.

Die Integrationssteuerung 503 ist über eine Signalleitung 514 mit dem Analog-/Digitalwandler 501 verbunden. Die Integrationssteuerung 503 steuert den Analog-/Digitalwandler 501 so an, daß er immer am Ende eines Integrationszyklusses das Integrationsergebnis in einen digitalen Wert umwandelt.

Die Integrationssteuerung 503 ist über eine Signalleitung 515 mit dem Integrationselement 500 verbunden. Die Integrationssteuerung 503 steuert das Integrationselement 500 über die Signalleitung 515 so an, daß das Integrationselement 500 am Beginn eines Abfragezyklusses des Zeilensensors 10 zurückgesetzt wird und aus den Daten eines Abfragezyklusses den Integralwert bildet.

Die Auswertesteuerung 416 ist über eine Signalleitung 428 mit der Integrationssteuerung 503 verbunden. Die Auswertesteuerung 416 teilt über die Signalleitung 428 der Integrationssteuerung 503 die Daten zur Synchronisation der Abläufe mit.

Der Vergleicher 504 ist über die Signalleitung 427 mit der Auswertesteuerung 416 verbunden. Der Vergleicher 504 teilt der Auswertesteuerung 416 über die Signalleitung 427 das Vergleichsergebnis mit.

## Patentansprüche

1. Verfahren zur Erfassung eines eine Zielebene durchfliegenden Projektils (40) mittels wenigstens eines ortsauflösenden Lichtdetektors (10;20), wobei:
a) durch wenigstens eine Lichtquelle (16; 26) wenigstens zwei Lichtfelder erzeugt werden, welche die Zielebene überstreichen und unter (einem) bestimmte(n) Winkel(n), insbesondere senkrecht, zueinander stehen;
dadurch gekennzeichnet, daß:
b) der jeweilige Schatten (41; 45) des die wenigstens zwei Lichtfelder durchdringenden Projektils (40) auf wenigstens eine Mattscheibe (12; 22) abgebildet wird;
c) das jeweilige Bild (42; 46) der wenigstens einen Mattscheibe (12; 22) von dem wenigstens einen ortsauflösenden Lichtdetektor (10; 20) erfaßt wird.

2. Verfahren nach Anspruch 1, wobei durch die wenigstens eine Lichtquelle (16; 26) wenigstens zwei Lichtfächer erzeugt werden und die jeweiligen Bilder (42; 46) der wenigstens einen Mattscheibe (12; 22) durch wenigstens einen Zeilensensor (10; 20), insbesondere einen CCD-Sensor, erfaßt werden.

3. Verfahren nach Anspruch 1 oder 2, wobei die Lichtfächer durch eine erste vor der wenigstens einen Lichtquelle (16; 26) angeordneten Blende (14; 24) mit schlitzförmiger Öffnung erzeugt wird und/oder das Licht der Lichtfächer anschließend durch eine zweite vor der wenigstens einen Mattscheibe (12; 22) angeordneten Blende (13; 23) mit schlitzförmiger Öffnung geführt wird.

4. Verfahren nach einem der vorstehenden Ansprüche, wobei das Licht der wenigstens einen Lichtquelle (16; 26) durch eine erste Optik (15; 25) gebündelt wird und/oder die jeweiligen Bilder (42; 46) der wenigstens einen Mattscheibe (12; 22) durch eine zweite Optik (11; 21) auf den wenigstens einen Lichtdetektor (10; 20) abgebildet werden.

5. Verfahren nach einem der vorstehenden Ansprüche, wobei die Lage des Projektils (40) in der Zielebene aus der Lage seiner jeweiligen Schattenbilder (42; 46) auf dem wenigstens einen Lichtdetektor (10; 20) und der Lage der Lichtquellen (16; 26) zueinander, insbesondere über den Vierstreckenstrahlensatz, bestimmt wird.

6. Vorrichtung zur Erfassung eines eine Zielebene durchfliegenden Projektils (40) mit:
a) wenigstens einer Lichtquelle (16; 26) zur Erzeugung wenigstens zweier Lichtfelder, welche die Zielebene überstreichen und unter (einem) bestimmten Winkel(n). insbesondere senkrecht, zueinander stehen; und
b) wenigstens einem ortsauflösenden Lichtdetektor (10;20),
dadurch gekennzeichnet, daß die Vorrichtung ferner aufweist:
c) wenigstens eine der wenigstens einen Lichtquelle (16; 26) in der Zielebene gegenüberliegende Mattscheibe (12; 22);
d) wobei der wenigstens eine ortsauflösende Lichtdetektor (10; 20) hinter der wenigstens einen Mattscheibe (12; 22) angeordnet ist.

7. Vorrichtung nach Anspruch 6, wobei die wenigstens eine Lichtquelle (16; 26) zur Erzeugung eines Lichtfächers ausgelegt ist und der wenigstens eine Lichtdetektor (10; 20) ein Zeilensensor, insbesondere ein CCD-Sensor, ist.

8. Vorrichtung nach Anspruch 6 oder 7, wobei eine Blende (14; 24 bzw. 13; 23) mit schlitzförmiger Öffnung vor der wenigstens einen Lichtquelle (16; 26) und/oder vor der wenigstens einen Mattscheibe (12; 22) angeordnet ist.

9. Vorrichtung nach Anspruch 8, wobei die schlitzförmige Öffnung derart ausgebildet ist, daß das Projektil (40) nicht hindurchtreten kann.

10. Vorrichtung nach einem der Ansprüche 6 bis 9, wobei zwei Lichtquellen (16; 26) vorgesehen sind, denen jeweils eine Blende (14; 24) mit senkrecht zueinander angeordneten Öffnungen zugeordnet ist.

11. Vorrichtung nach einem der Ansprüche 8 bis 10, wobei jeweils eine Optik (15; 25 bzw. 11; 21) vorgesehen ist, die zwischen der Lichtquelle (16; 26) und der zugeordneten Blende (14; 24) und/oder zwischen der Mattscheibe (12; 22) und dem Lichtdetektor (10; 20) angeordnet ist.

12. Verfahren zur Auswertung eines Meßsignals von einer Vorrichtung nach einem der Ansprüche 6 bis 11, wobei:
a) die Meßsignale bzw. Einzelmeßsignale einzelner Sensorelemente (50; 51; 52) des Lichtdetektors (10; 20) während eines Meßzyklus integriert und die so erhaltenen Summensignale einzelner Sensorelemente (50; 51; 52) zu einem Gesamtwert addiert oder integriert werden;
b) der Gesamtwert mit einem Referenzwert verglichen wird; und
c) im Falle einer Abweichung vom Referenzwert das/die, insbesondere vom Schatten des Projektils, abgedunkelte(n) Sensorelement(e) (51; 52) des Lichtdetektors (10; 20) bestimmt wird/werden und daraus die Lage des Projektils (40) in der Zielebene abgeleitet wird.

13. Verfahren nach Anspruch 12, wobei im Falle einer Abweichung des Gesamtwertes vom Referenzwert aus einem Vergleich der integrierten Summensignale des aktuellen Meßzyklus mit denen wenigstens eines vorhergehenden Meßzyklus das/die abgedunkelte(n) Sensorelement(e) (51; 52) und daraus die Lage des Schattens ermittelt wird/werden.

14. Verfahren nach Anspruch 12 oder 13, wobei die integrierten Summensignale und der Gesamtwert für eine vorgegebene Anzahl an Meßzyklen gespeichert werden.

15. Verfahren nach Anspruch 14, wobei der Referenzwert als Mittelwert einer Anzahl abgespeicherter Gesamtwerte vorhergehender Meßzyklen ohne Abdunklung bestimmt wird.

16. Verfahren nach einem der Ansprüche 12 bis 15, wobei der Differenzbetrag zwischen einem integrierten Summensignal und einem zugeordneten Referenzsummensignal (eines internen Summensignals), die Summe über alle oder nahezu alle so erhaltenen Differenzbeträge eines Meßzyklus gebildet wird, durch Verändern der Zuordnung zwischen integriertem Summensignal und Referenzsummensignal die so erhaltene Summe an Differenzbeträgen minimiert wird, und aus der so erhaltenen Zuordnung die Lage des/der abgedunkelten Sensorelemente(s) (51; 52) korrigiert wird.

17. Verfahren nach Anspruch 16, wobei das Referenzsummensignal als Mittelwert einer Anzahl abgespeicherter Signalsummen vorhergehender Meßzyklen ohne Abdunklung bestimmt wird.

18. Verfahren nach einem der Ansprüche 13 bis 17, wobei die Beleuchtungsstärke der Lichtquelle (16; 26) derart eingestellt wird, daß das Sensorelement mit dem größten Meßsignal nahezu seinen maximal zulässigen Pegel erreicht.

19. Vorrichtung zur Auswertung eines Meßsignals von einer Vorrichtung nach einem der Ansprüche 6 bis 11 mit:
a) einem ersten Integrator zum Auf integrieren der Meßsignale einzelner Sensorelemente (50; 51; 52) des Lichtdetektors (10; 20) während eines Meßzyklus und einem Addierer oder einem zweiten Integrator (414) zum Addieren oder Integrieren der so erhaltenen Summensignale einzelner Sensorelemente (50; 51; 52) zu einem Gesamtwert;
b) einem Komparator (417) zum Vergleichen des Gesamtwertes mit einem Referenzwert; und
c) einer Recheneinheit (416) zum Bestimmen des/der abgedunkelten Sensorelemente(s) (51; 52) im Falle einer Abweichung des Gesamtwertes vom Referenzwert und daraus der Lage des Projektils (40) in der Zielebene.

20. Vorrichtung nach Anspruch 19, wobei die Recheneinheit (416) derart ausgelegt ist, daß sie das/die abgedunkelte(n) Sensorelement(e) (51; 52) des Lichtdetektors (10; 20) aus dem Vergleich der integrierten Summensignale eines aktuellen Meßzyklus mit denen wenigstens eines vorhergehenden Meßzyklus bestimmt.

21. Vorrichtung nach Anspruch 19 oder 20, wobei die Vorrichtung ferner einen Speicher (415, 429) zum Speichern der integrierten Signalsummen und des Gesamtwertes für eine vorgegebene Anzahl an Meßzyklen aufweist.

22. Vorrichtung nach einem der Ansprüche 19 bis 21, wobei die Recheneinheit (416) zum Bestimmen des Referenzwertes als Mittelwert einer Anzahl abgespeicherter Gesamtwerte vorhergehender Meßzyklen ohne Abdunklung ausgelegt ist.

23. Vorrichtung nach einem der Ansprüche 19 bis 22, wobei die Recheneinheit (416) zum Bilden des Differenzbetrages zwischen einem integrierten Summensignal und einem zugeordneten Referenzsummensignal (eines internen Summensignals), zum Summieren der so erhaltenen Differenzbeträge über alle oder nahezu alle Differenzbeträge eines Meßzyklus, zum Minimieren der so erhaltenen Summe an Differenzbeträgen durch Verändern der Zuordnung zwischen integriertem Summensignal und Referenzsummensignal, und zum Korrigieren der Lage des/der abgedunkelten Sensorelemente(s) (51; 52) aus der so erhaltenen Zuordnung ausgelegt ist.

24. Vorrichtung nach Anspruch 23, wobei die Recheneinheit (416) zum Bestimmen des Referenzsummensignals als Mittelwert einer Anzahl abgespeicherter Signalsummen vorhergehender Meßzyklen ohne Abdunklung ausgelegt ist.

25. Vorrichtung nach einem der Ansprüche 19 bis 24, wobei eine Detektorsteuereinheit (410) zum Steuern des Lichtdetektors (10; 20) und/oder der Lichtquelle (16; 26) vorgesehen ist.

26. Vorrichtung nach einem der Ansprüche 19 oder 25, wobei die Vorrichtung ferner einen Analog-/Digitalwandler (411) zur Umwandlung der empfangenen Meßsignale des Lichtdetektors (10; 20) aufweist.

27. Vorrichtung nach einem der Ansprüche 19 bis 26, wobei der Lichtdetektor (10; 20) den ersten Integrator umfaßt.

28. Vorrichtung nach einem der Ansprüche 19 bis 27, die mit einer weiteren Vorrichtung nach einem der Ansprüche 26 bis 34 gekoppelt ist, derart, daß eine XY-Lage des Projektils (40) in der Zielebene bestimmbar ist.

## Claims

1. Method for detecting a projectile (40) flying through a target plane by means of at least one high-sensitivity resolution light detector (10; 20), wherein: by means of at least one light source (16; 26) at least two light fields are generated, which sweep over the target plane and stand at (a) certain angle(s) to each other, especially perpendicular; characterised in that the particular shadow (41; 45) of the projectile (40) penetrating the at least two light fields is reproduced on at least one diffusing screen (12; 22);
the particular image (42; 46) of the at least one diffusing screen (12; 22) is captured by the at least one high-sensitivity resolution light detector (10; 20).

2. Method according to claim 1, wherein at least two light fans are generated by the at least one light source (16; 26) and the respective images (42; 46) of the at least one diffusing screen (12; 22) are captured by at least one line sensor (10; 20), especially a CCD sensor.

3. Method according to claim 1 or 2, wherein the light fans are generated through an initial screen (14; 24) with slit-type opening arranged in front of the at least one light source (16; 26) and/or the light from the light fans is then guided through a second screen (13; 23) with slit-type opening arranged in front of the at least one diffusing screen (12; 22).

4. Method according to one of the previous claims, wherein the light from the at least one light source (16; 26) is concentrated through an initial lens system (15; 25) and/or the respective images (42; 46) of the at least one diffusing screen (12; 22) are reproduced through a second lens system (11; 21) on to the at least one light detector (10; 20).

5. Method according to one of the previous claims, wherein the position of the projectile (40) in the target plane is determined from the position of its respective shadow images (42; 46) on the at least one light detector (10; 20) and the position of the light sources (16; 26) to each other, especially via the four-section set of beams.

6. Device for detecting a projectile (40) flying through a target plane with:
at least one light source (16; 26) for generating at least two light fields, which sweep over the target plane and stand at (a) certain angle(s) to each other, especially perpendicular; and
at least one high-sensitivity resolution light detector (10; 20)
characterised in that the device also has:
at least one of the at least one light source (16; 26) in the diffusing screen (12; 22) facing the target plane;
wherein the at least one high-sensitivity resolution light detector (10; 20) is arranged behind the at least one diffusing screen (12; 22).

7. Device according to claim 6, wherein the at least one light source (16; 26) is designed to generate a light fan and the at least one light detector (10; 20) is a line sensor, especially a CCD sensor.

8. Device according to claim 6 or 7, wherein a screen (14; 24 or 13; 23) with a slit-type opening is arranged in front of the at least one light source (16; 26) and/or the at least one diffusing screen (12; 22).

9. Device according to claim 8, wherein the slit-type opening is constructed in such a way that the projectile (40) cannot pass through.

10. Device according to one of the claims 6 to 9, wherein two light sources (16; 26) are provided, to each of which is assigned a screen (14; 24) with openings arranged perpendicular to each other.

11. Device according to one of the claims 8 to 10, wherein a lens system (15; 25 or 11; 21) is provided in each case, which is arranged between the light source (16; 26) and the assigned screen (14; 24) and/or between the diffusing screen (12; 22) and the light detector (10; 20).

12. Method for evaluating a measuring signal from a device according to one of the claims 6 to 11, wherein:
the measuring signals or individual measuring signals of individual sensor elements (50; 51; 52) of the light detector (10; 20) are integrated during a measuring cycle and the thus obtained cumulative signals of individual sensor elements (50; 51; 52) are added or integrated to a total value;
the total value is compared with a reference value;
and in the event of a deviation from the reference value, the sensor element(s) (51; 52) of the light detector (10; 20), which is/are darkened by the shadow of the projectile (40) particularly, is/are determined, and, from this, the position of the projectile (40) in the target plane is derived.

13. Method according to claim 12, wherein in the event of a deviation of the total value from the reference value, the darkened sensor element(s) (51; 52) and, from this, the position of the shadow are established from a comparison of the integrated cumulative signals of the current measuring cycle with those of at least one previous measuring cycle.

14. Method according to claim 12 or 13, wherein the integrated cumulative signals and the total value are stored for a given number of measuring cycles.

15. Method according to claim 14, wherein the reference value is determined as a mean value of a number of stored total values of previous measuring cycles without darkening.

16. Method according to one of the claims 12 to 15, wherein the difference between an integrated cumulative signal and an allocated cumulative reference signal (of an internal cumulative signal) forms the sum of all or nearly all differences of a measuring cycle thus obtained, wherein the sum of the differences thus obtained is minimised by altering the allocation between integrated cumulative signal and cumulative reference signal, and the position of the darkened sensor element(s) (51; 52) is corrected from the allocation thus obtained.

17. Method according to claim 16, wherein the cumulative reference signal is determined as a mean value of a number of stored signal sums of previous measuring cycles without darkening.

18. Method according to one of the claims 13 to 17, wherein the illuminance of the light source (16; 26) is calibrated in such a way that the sensor element with the greatest measuring signal almost reaches its maximum permissible level.

19. Device for evaluating a measuring signal from a device according to one of the claims 6 to 11 with:
an initial integrator for integrating the measuring signals of individual sensor elements (50; 51; 52) of the light detector (10; 20) during a measuring cycle and an adder or a second integrator (414) for adding or integrating the thus obtained cumulative signals of individual sensor elements (50; 51; 52) to a total value;
a comparator (417) for comparing the total value with a reference value; and
an computing unit (416) for determining the darkened sensor element(s) (51; 52) in the event of a deviation of the total value from the reference value and, from this, the position of the projectile (40) in the target plane.

20. Device according to claim 19, wherein the computing unit (416) is designed in such a way that it determines the darkened sensor element(s) (51; 52) of the light detector (10; 20) from the comparison of the integrated cumulative signals of a current measuring cycle with those of at least one previous measuring cycle.

21. Device according to claim 19 or 20, wherein the device also has a memory (415, 429) for storing the integrated signal sums and the total value for a given number of measuring cycles.

22. Device according to one of the claims 19 to 21, wherein the computing unit (416) is designed for determining the reference value as a mean value of a number of stored total values of previous measuring cycles without darkening.

23. Device according to one of the claims 19 to 22, wherein the computing unit (416) is designed for forming the difference between an integrated cumulative signal and an allocated cumulative reference signal (of an internal cumulative signal), for adding up the differences thus obtained of all or nearly all differences of a measuring cycle, for minimising the sum of the differences thus obtained by altering the allocation between integrated cumulative signal and cumulative reference signal, and for correcting the position of the darkened sensor element(s) (51; 52) from the allocation thus obtained.

24. Device according to claim 23, wherein the computing unit (416) is designed for determining the cumulative reference signal as a mean value of a number of stored signal sums of previous measuring cycles without darkening.

25. Device according to one of the claims 19 to 24, wherein a detector control unit (410) is provided for controlling the light detector (10; 20) and/or light source (16; 26).

26. Device according to one of the claims 19 or 25, wherein the device also has an analog-digital converter (411) for converting the received measuring signals of the light detector (10; 20).

27. Device according to one of the claims 19 to 26, wherein the light detector (10; 20) comprises the initial integrator.

28. Device according to one of the claims 19 to 27, which is coupled to a further device according to one of the claims 26 to 34 in such a way that an XY position of the projectile (40) is determinable in the target plane.

## Revendications

1. Procédé pour détecter un projectile (40) traversant un plan de cible, à l'aide d'au moins un détecteur de lumière (10 ; 20) réalisant une résolution locale, selon lequel:
a) au moins une source de lumière (16 ; 26) produit au moins deux champs d'éclairement, qui balayent le plan de cible et font entre eux un ou des angles déterminés, notamment sont perpendiculaires entre eux,
caractérisé en ce que
b) l'image de l'ombre respective (41 ; 45) du projectile (40) qui traverse les au moins deux champs d'éclairement est formée sur au moins un écran dépoli (12 ; 22) ;
c) l'image respective (42 ; 46) du au moins un écran dépoli (12 ; 22) est détectée par l'au moins un détecteur de lumière à résolution locale (10 ; 20).

2. Procédé selon la revendication 1, selon lequel l'au moins une source de lumière (16 ; 26) produit au moins deux faisceaux de lumière en éventail et les images respectives (42 ; 46) de l'au moins un écran dépoli (12 ; 22) sont détectées par au moins un capteur d'alignement (10 ; 20), notamment un capteur CCD.

3. Procédé selon la revendication 1 ou 2, selon lequel les faisceaux de lumière en éventail sont produits par un premier diaphragme (14 ; 24) qui est disposé devant la au moins une source de lumière (16 ; 26) et possède une ouverture en forme de fente et/ou la lumière des faisceaux de lumière est ensuite guidée par un second diaphragme (13 ; 23) qui est disposé devant l'au moins un écran dépoli (12 ; 22) et comporte une ouverture en forme de fente.

4. Procédé selon l'une des revendications précédentes selon lequel la lumière de l'au moins une source de lumière (1 ; 26) est focalisée par un premier système optique (15 ; 25) et/ou que les images respectives (42 ; 46) de l'au moins un écran dépoli (12 ; 22) sont fournies par un second système optique (11 ; 21) sur le au moins un détecteur de lumière (1 ; 10).

5. Procédé selon l'une des revendications précédentes, selon lequel la position du projectile (40) dans le plan de cible est déterminée à partir de la position de ses images en forme d'ombres respectives (42,46) sur l'au moins un détecteur de lumière (10 ; 20) et à partir de la position réciproque des sources de lumière (16 ; 26) notamment par l'intermédiaire de l'ensemble de faisceaux à quatre sections.

6. Dispositif pour détecter un projectile (40) traversant un plan de cible, comprenant :
a) au moins une source de lumière (16 ; 26) pour produire au moins deux champs d'éclairement, qui balayent le plan de cible et font entre eux un ou des angles déterminés, notamment sont perpendiculaires entre eux, et
b) au moins un détecteur de lumière à résolution locale (10 ; 20),
caractérisé en ce que le dispositif comporte en outre:
c) au moins un écran dépoli (12 ; 22) situé en vis-à-vis de l'au moins une source de lumière (16 ; 26) dans le plan de cible ;
d) l'au moins un détecteur de lumière à résolution locale (10 ; 20) étant disposé derrière le au moins un disque masque (10 ; 22).

7. Dispositif selon la revendication 6, selon lequel l'au moins une source de lumière (16 ; 26) est conçue pour produire un faisceau de lumière en éventail et l'au moins un détecteur de lumière (10 ; 20) est un capteur d'alignement, notamment un capteur CCD.

8. Dispositif selon la revendication 6 ou 7, dans lequel un diaphragme (14 ; 24 ou 13 ; 23) possédant une ouverture en forme de fente est disposé devant l'au moins une source de lumière (16 ; 26) et/ou devant l'au moins un écran dépoli (12 ; 22).

9. Dispositif selon la revendication 8, dans lequel l'ouverture en forme de fente est agencée de telle sorte que le projectile (40) ne puisse pas la traverser.

10. Dispositif selon l'une des revendications 6 à 9, dans lequel il est prévu deux sources de lumière (16 ; 26), auxquelles sont associés des diaphragmes respectifs (14 ; 24) possédant des ouvertures perpendiculaires entre elles.

11. Dispositif selon la revendication 8 à 10, selon lequel il est prévu respectivement un système optique (15 ; 25 ou 11 ; 21), qui est disposé entre la source de lumière (16 ; 26) et le diaphragme associé (14 ; 24) et/ou entre l'écran dépoli (12 ; 22) et le détecteur de lumière (10 ; 20).

12. Procédé pour l'exploitation d'un signal de mesure d'un dispositif selon l'une des revendications 6 à 11, selon lequel:
a) les signaux de mesure ou les signaux de mesure individuels d'éléments formant capteurs individuels (50 ; 51 ; 52) du détecteur de lumière (10 ; 20) sont intégrés pendant un cycle de mesure et les signaux de somme ainsi obtenus d'éléments formant capteurs individuels (50 ; 51 ; 52) sont additionnés ou intégrés pour former une valeur totale ;
b) la valeur totale est comparée à une valeur de référence ; et
c) dans le cas d'un écart par rapport à la valeur de référence, le ou les éléments formant capteurs (51 ; 52) du détecteur de lumière (10 ; 20) qui sont assombris, notamment par l'ombre du projectile, sont déterminés et la position du projectile (40) dans le plan de cible en est déduite.

13. Procédé selon la revendication 12, selon lequel, dans le cas d'un écart de la valeur totale par rapport à la valeur de référence indiqué par une comparaison des signaux de somme intégrés du cycle de mesure actuel à ceux d'au moins un cycle de mesure précédent, le ou les éléments formant capteurs (51 ; 52) assombris et, à partir de là, la position de l'angle sont déterminés.

14. Procédé selon la revendication 12 ou 13, selon lequel les signaux de somme intégrés et la valeur totale pour un nombre prédéterminé de cycles de mesure sont mémorisés.

15. Procédé selon la revendication 14, selon lequel la valeur de référence est déterminée en tant que valeur moyenne d'un nombre de valeurs totales mémorisées de cycles précédents, sans assombrissement.

16. Procédé selon l'une des revendications 12 à 15, selon lequel la valeur absolue de la différence entre le signal de somme intégré et un signal de somme de référence associé (un signal de somme interne) est formée, la somme sur la totalité ou presque la totalité des valeurs absolues de différence ainsi obtenues d'un cycle de mesure est formée, la somme ainsi obtenue des valeurs absolues de différence est réduite par modification de l'association entre le signal de somme intégré et le signal de somme de référence, et la position du ou des éléments formant capteurs (51 ; 52) assombris est corrigée à partir de l'association ainsi obtenue.

17. Procédé selon la revendication 16, selon lequel le signal somme de référence est déterminé en tant que valeur moyenne d'un nombre de sommes de signaux mémorisées de cycles de mesure précédents, sans assombrissement.

18. Procédé selon l'une des revendications 13 à 17, selon lequel l'intensité d'éclairement de la source de lumière (16 ; 26) est réglée de telle sorte que l'élément formant capteur présentant le signal de mesure maximal atteigne presque son niveau maximal admissible.

19. Dispositif pour l'exploitation d'un signal de mesure d'un dispositif selon l'une des revendications 6 à 11, comportant :
a) un premier intégrateur pour intégrer les signaux de mesure de différents éléments formant capteurs (50 ; 51 ; 52) du détecteur de lumière (10 ; 20) pendant un cycle de mesure, et un additionneur ou un second intégrateur (94) pour additionner ou intégrer les signaux de somme ainsi obtenus d'éléments formant capteurs individuels (50 ; 51 ; 52) pour former une valeur totale ;
b) un comparateur (417) pour comparer la valeur totale à une valeur de référence ; et
c) une unité de calcul (416) pour déterminer le ou les éléments formant capteurs (51,52) assombris, dans le cas d'un écart de la valeur totale par rapport à la valeur de référence et, à partir de là, la position du projectile (40) dans le plan de cible.

20. Dispositif selon la revendication 19, dans lequel l'unité de calcul (416) est agencée de telle sorte qu'elle détermine le ou les éléments formant capteurs (51 ; 52) assombris du détecteur de lumière (10 ; 20) à partir de la comparaison des signaux de somme intégrés d'un cycle de mesure actuel à ceux d'au moins un cycle de mesure précédent.

21. Dispositif selon la revendication 19 ou 20, selon lequel le dispositif comporte en outre une mémoire (415,429) pour mémoriser les sommes de signaux intégrés et la valeur totale pour un nombre prédéterminé de cycles de mesure.

22. Dispositif selon l'une des revendications 19 à 21, selon lequel l'unité de calcul (416) est conçue pour déterminer la valeur de référence en tant que valeur moyenne d'un nombre de valeurs totales mémorisées de cycles mesure précédents sans assombrissement.

23. Dispositif selon l'une des revendications 19 à 22, dans lequel l'unité de calcul (416) est conçue pour former la valeur absolue de la différence entre un signal de somme intégré et un signal de somme de référence associé (d'un signal de somme interne) pour effectuer la sommation des valeurs absolues de différence obtenus sur la totalité ou presque la totalité des valeurs absolues de différence d'un cycle de mesure, pour réduire la somme ainsi obtenue des valeurs absolues de différence par modification de l'association entre le signal de somme intégré et le signal de somme de référence, et pour corriger la position du ou des éléments formant capteurs (51 ; 52) assombris, à partir de l'association ainsi obtenue.

24. Dispositif selon la revendication 23, selon lequel l'unité de calcul (416) est conçue pour déterminer le signal de somme de référence en tant que valeur moyenne d'un nombre de sommes de signaux mémorisées de cycles de mesure précédents sans assombrissement.

25. Dispositif selon l'une des revendications 19 à 24, dans lequel une unité (410) de commande du détecteur est prévue pour commander le détecteur de lumière (10 ; 20) et/ou la source de lumière (16 ; 26).

26. Dispositif selon l'une des revendications 19 ou 25, dans lequel le dispositif comporte en outre un convertisseur analogique/numérique (411) pour convertir les signaux de mesure reçus du détecteur de lumière (10 ; 20).

27. Dispositif selon l'une des revendications 19 à 26, dans lequel le détecteur de lumière (10 ; 20) comprend un premier intégrateur.

28. Dispositif selon l'une des revendications 19 à 27, qui est couplé à un autre dispositif selon l'une des revendications 26 à 34, de telle sorte qu'une position XY du projectile (40) dans le plan de cible puisse être déterminée.
